(19) Europäisches Patentamt
European Patent Office
Office européen des brevets

(11) **EP 4 618 450 A2**

(12) **EUROPEAN PATENT APPLICATION**

(43) Date of publication:
**17.09.2025 Bulletin 2025/38**

(21) Application number: **25163645.2**

(22) Date of filing: **13.03.2025**

(51) International Patent Classification (IPC):
**H04B 17/345** (2015.01)   **H04B 17/14** (2015.01)

(52) Cooperative Patent Classification (CPC):
**H04B 17/345; H04B 17/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2024 US 202463564542 P**
**12.03.2025 US 202519078087**

(71) Applicant: **Mavenir Systems, Inc.**
**Richardson, TX 75081 (US)**

(72) Inventors:
• **Pisek, Eran**
  **Plano, 75025, TX (US)**
• **Hiremath, Channamallesh**
  **Allen, 75013, TX (US)**
• **Yang, Yu-Kai**
  **Ottawa, ON K2K 0A4 (CA)**
• **Thakkar, Arun**
  **Cedar Park, 78613, TX (US)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR MASSIVE-MIMO INTERFERENCE DETECTION AND CANCELLATION**

(57)    A system and method for Massive-MIMO Interference detection and cancellation in Radio Access Networks.

100

**FIG. 1**

**EP 4 618 450 A2**

**Description**

**DESCRIPTION OF THE RELATED TECHNOLOGY**

a. Field of the Disclosure

The present disclosure relates to systems and methods for radio access networks. The present disclosure in particular relates to the design of operation, administration and management of various network elements of 4G, 5G, and further or 5G massive MIMO based mobile networks in a Fifth Generation (5G) New Radio (NR) system.

b. Description of the Related Art

Current 5G-NR gNB systems support high number of antennas to increase the plurality of the streams and/or increase the joint antenna gain by applying digital/analog/hybrid beamforming to simultaneously address multiple UEs locating in different trajectories to the gNB. The increased number of antennas per gNB and per sector is often called Massive-MIMO and can be as high as 32 and 64 antennas (or an even higher number of antennas) per gNB and per sector.
These Massive-MIMO antennas need to jointly work to achieve an optimized transmission and reception by forming one or multiple beams simultaneously projecting or receiving to or from different directions, as well as nulling different directions in the case of interference. Each antenna can be driven by a separate and dedicated baseband and an RF circuit. Separate baseband and especially RF circuit can cause imbalanced antenna chains. The imbalance can be expressed in different gain, delay, and phase and different radio frequency (RF) and temperature conditions. The imbalance can cause a degradation in the joint antenna beam gain performance and increase the muti-beam interference once multiple antennas are combined while transmitted and received to and from one or multiple UEs. Different antenna calibration methods have been proposed and developed to align and equalize the massive-MIMO antennas in terms of gain, delay, and phase for both downlink (DL) and Uplink (UL), to obtain maximum efficiency in joint transmission and reception. However, continuous monitoring is required to confirm the effectiveness of the antenna calibration in terms of the hardware components' functionality and interference.

**OVERVIEW OF IMPLEMENTATIONS**

Described is a system and method to identify the functionality level of the hardware components involved in the antenna calibration process, as well as, detecting external interference that can affect the antenna calibration performance as well as the radio unit (RU) receiver performance in general. Also described are systems and methods to suppress and cancel these interferences in the RU.

**BRIEF DESCRIPTION OF THE DRAWINGS**

FIG. 1 is a block diagram of a system architecture.

FIG. 2 shows an example of a User Plane Stack.

FIG. 3 shows an example of a Control Plane Stack.

FIG. 4 shows an example of a Separation of CU-CP (CU-Control Plane) and CU-UP (CU-User Plane).

FIG. 5A shows an example of a Separation of CU-CP (CU-Control Plane) and CU-UP (CU-User Plane).

FIG. 5B shows an example of a Separation of 4G CU-CP (CU-Control Plane) and CU-UP (CU-User Plane).

FIG. 6 shows a DL (Downlink) Layer 2 Structure.

FIG. 7 shows an exemplary logical flow for implementing an RB allocation policy.

FIG. 8 shows an L2 Data Flow example.

FIG. 9A shows an example of an O-RAN architecture.

EP 4 618 450 A2

FIG. 9B shows an example of an O-RAN architecture.

FIG. 10 describes an E-UTRAN architecture.

FIG. 11 describes an EN-DC architecture.

FIG. 12 illustrates an Antenna Calibration Block Diagram.

FIG. 13 describes the 5G NR Frame Format for Sub-Carrier Spacing.

FIG. 14 provides the Tx/Rx (DL/UL) ZC capture cross correlation gain/phase results in OFDM-based frequency-domain for 32 Massive-MIMO antennas.

FIG. 15 is an example for a typical Massive-MIMO communication scenario.

FIG. 16 is another example for a typical Massive-MIMO communication scenario.

FIG. 17 depicts lab scenarios from the for no interference and sinewave interference signals received in all RU antennas ports.

FIG. 18 describes the effect of a ducting interference from the field.

FIG. 19 describes a sub-band temporal interference.

FIG. 20 describes a mix of sub-band temporal and persistent interference.

FIG. 21 depicts an antenna calibration block diagram with interference sensing/cancellation.

FIG. 22 shows an implementation of Interference/Aggressor Sensing using Massive-MIMO Antennas.

FIG. 23 is the interference sensing flowchart as part of the antenna calibration process.

FIG. 24 depicts the interference/aggressor estimation block diagram.

FIG. 25 describes method by which aggressor AoA is estimated.

FIG. 26 is a flowchart showing an interference cancellation.

FIG. 27 describes a beamforming gain per AoA for a MIMO.

FIG. 28 presents the effect of the user-beam gain in the presence of an aggressor.

FIG. 29 describes a per AoA SINR for 2 layers.

FIG. 30 shows Interference cancellation results.

FIG. 31 provides an example for partial PRB interference and its interference sensing results.

FIG. 32 is an example of ACLR Measurement and Out-of-CC Interference Detection.

FIG. 33 is an example of Super-CC based ACLR Measurement and Out-of-CC Interference Detection.

FIG. 34 shows a Parallel Processing Rx Calibration Architecture.

**DETAILED DESCRIPTION**

Reference is made to Third Generation Partnership Project (3GPP) and the Internet Engineering Task Force (IETF) and related standards bodies in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

0-RAN.WG4.MP.0-R003-v13.00

3GPP TS 23.501 V 18.1.0 2023-04-05

3GPP TS 38.300 V 17.4.0 03-28-2023

3GPP TS 38.401 V 17.4.0 2023-04-03

3GPP TS 38.425 17.3.0, 2023-04-03

3GPP TS 38.211 V 15.2.0 // ETSI TS 138 211 V15.2.0 (2018-07)

*Acronyms*

3GPP: Third generation partnership project
ADC: Analog-to-Digital Converter
ACLR: Gain and Adjacent Channel Leakage Ratio
AoA: Angle-of-Arrival
ASIC: Application Specific Integrated Circuit
AWGN: Additive White Gaussian Noise
BFW: Beamforming weight
BS: Base Station
C-RAN: cloud radio access network
CU: Central unit
CQI: Channel Quality Indicator
DFE: Digital Front End
DL: Downlink
DCI: Downlink Control Information
DU: Distributed unit
EPC: Evolved Packet Core
eNB: evolved Node B
gNB: g NodeB
EN-DC
DAC: Digital-to-Analog Converter
DMRS: Demodulation Reference Signal
ETSI: European Telecommunications Standards Institute
FPGA: Field-Programmable Gate Array
IoT: Internet of Things
L1: Layer 1
L2: Layer 2
L3: Layer 3
RLC: Radio Link Control
RRC: Radio Resource Control
RU: Radio Unit
U-plane: User plane
UPF: User Plane Function
UE: user equipment
UL: uplink
MIMO: multiple-in multiple-out
MME: Mobility Management Entity

MR-DC: Multi-Radio Dual Connectivity
M-plane: Management plane interface between SMO and O-RU
NB: Narrowband
NR: New Radio
NR-U: New Radio - User Plane
OFDM: orthogonal frequency-division multiplexing
O-RAN: Open Radio Access Network
PA: Power Amplifier
PDCP: Packet Data Convergence Protocol
PDCCH: Physical Downlink Control Channel
PDSCH: Physical Downlink Shared Channel
PUCCH: Physical Uplink Control Channel
PUSCH: Physical Uplink Shared Channel
PDCP: Packet Data Convergence Protocol
QCI: QoS Class Identifier
QFI: QoS Flow Id
QoS : Quality of Service
RLC: Ratio Link Control
MAC: Medium Access Control
PHY: Physical Layer
PRG: Physical Resource block Group
RAT: Radio Access Technology
RB: Resource Block
RLC: Radio Link Control
RU: Radio Unit
RMM: Radio resource management
SINR: Signal-to-Interference and Noise Ratio
SN: Signal Node
SR: Scheduling Request
SRS: Sounding Reference Signal
SMO: Service Management and Orchestration system
S-GW: Serving Gateway

Described are implementations of technology for a cloud-based Radio Access Networks (RAN), where a significant portion of the RAN layer processing is performed at a central unit (CU) and a distributed unit (DU). Both CUs and DUs are also known as the baseband units (BBUs). CUs are usually located in the cloud on commercial off the shelf servers, while DUs can be distributed. while the RF and real-time critical functions can be processed in the remote radio unit (RU).

*RAN Architectures*

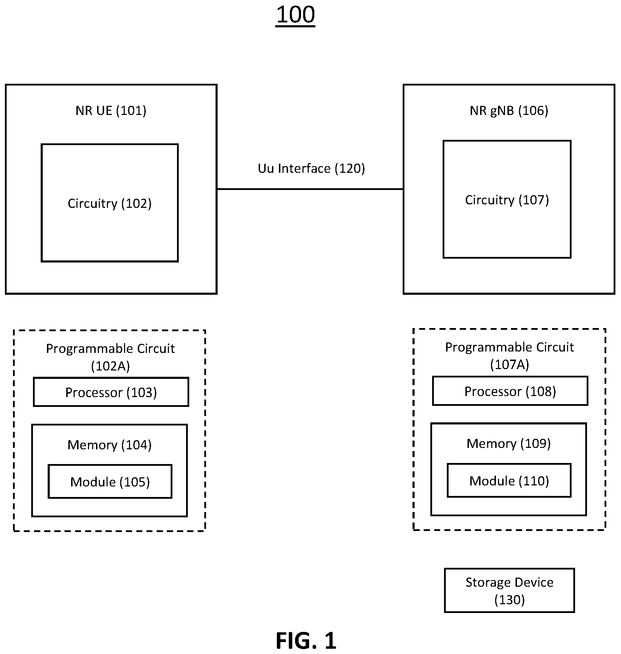

FIG. 1 is a block diagram of a system 100 for implementations as described herein. System 100 includes a NR UE 101, a NR gNB 106. The NR UE and NR gNB are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 comprises instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE can be stationary or mobile. A UE includes: an access terminal, a terminal, a mobile station, a subscriber unit, a station, etc. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, and the like), an entertainment device (e.g., a music device, a video device, a satellite radio, and the like), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN can be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which can be referred to as a CRAN and/or a vBBU. In these embodiments, the CRAN or vBBU can implement a RAN function split, such as a PDCP split wherein RRC and PDCP layers are operated by the CRAN/vBBU and other L2 protocol entities are operated by individual RAN nodes; a MAC/PHY split where RRC, PDCP, RLC, and MAC layers are operated by the CRAN/vBBU and the PHY layer is operated by individual RAN nodes; or a "lower PHY" split where RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs can include one or more remote radio heads (RRH), and the gNB-CU 151can be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and can be similar to eNBs in an 3GPP architecture.

In some implementations, access to a wireless interface can be scheduled, wherein a scheduling entity (e.g.: BS, gNB, and the like) allocates bandwidth resources for devices and equipment within its service area or cell. As scheduling entity can be configured to schedule, assign, reconfigure, and release resources for one or more subordinate entities. In some examples, a UE 101 (or other device) can function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities can communicate utilizing the scheduled resources.

BS or gNB 106 can be equipped with T antennas and UE 101 can be equipped with R antennas, where in general $T \geq 1$ and $R \geq 1$. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI), and the like) and control information (e.g., CQI requests, grants, upper layer signaling, and the like) and can provide overhead symbols and control symbols. Processor 108 can also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, and the like) to obtain an output sample stream. Each modulator can further be configured to process (e.g., convert to analog, amplify, filter, and upconvert) the output sample stream to obtain a downlink signal. T downlink signals from modulators can be transmitted via T antennas.

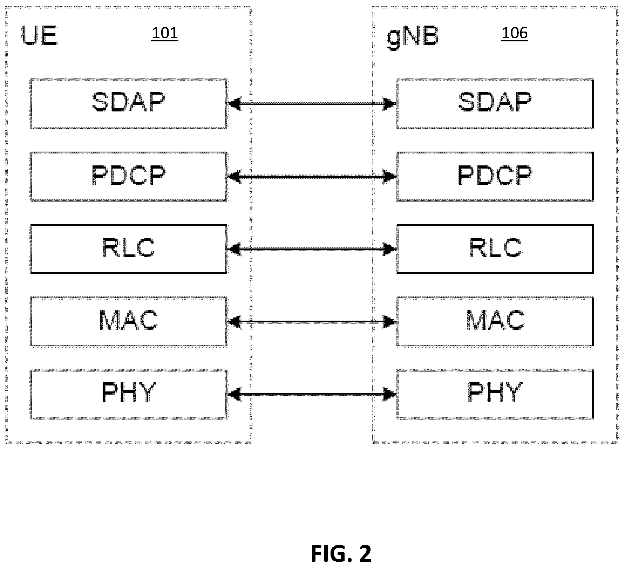

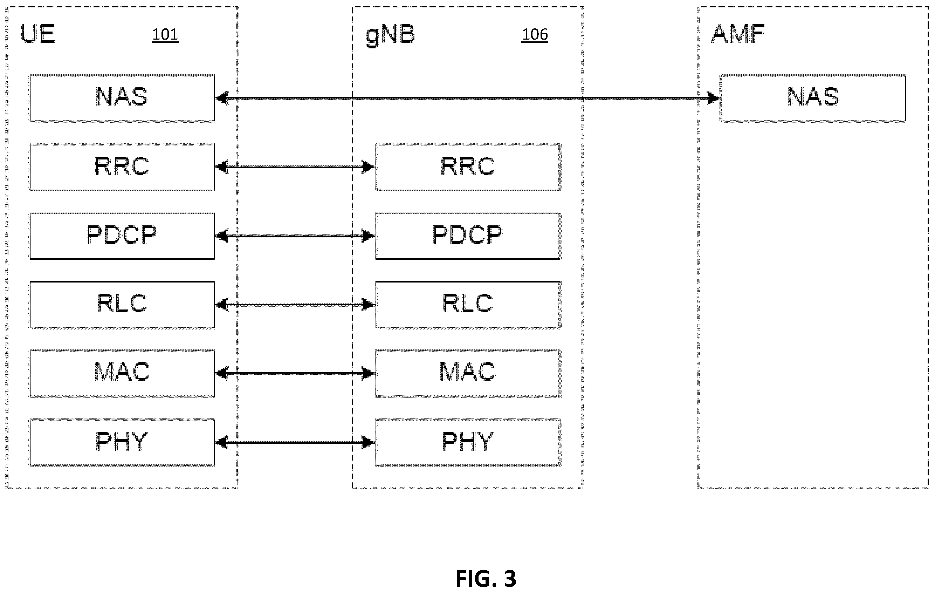

An overview of 5G NR Stacks is as follows. 5G NR (New Radio) user and control plane functions with monolithic gNB 106 are shown in FIG. 1 and FIG. 2. For the user plane, PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. For the control plane, RRC (Radio Resource Control), PDCP, RLC, MAC and PHY sublayers are terminated in the gNB 106 on the network side and NAS (Non-Access Stratum) is terminated in the AMF (Access Mobility Function) on the network side. FIG. 2 shows an example of a User Plane Stack as descried in 3GPP TS 38.300. FIG. 3 shows an example of a Control Plane Stack as described in 3GPP TS 38.300.

An NG-RAN (NG-Radio Access Network) architecture from 3GPP TS 38.401 is described below. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

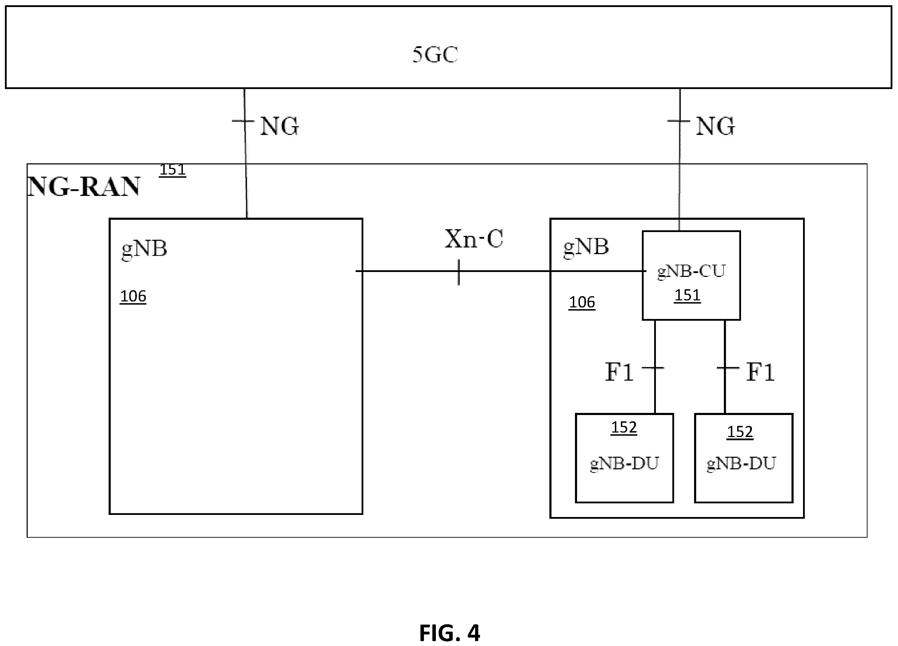

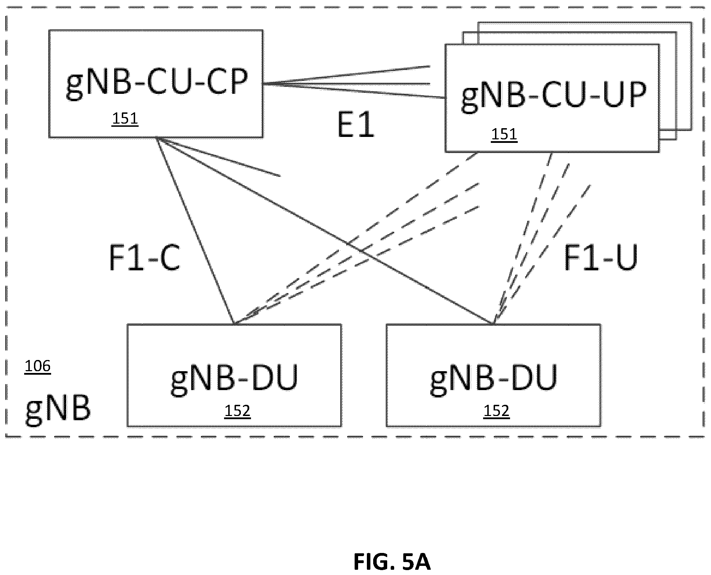

A gNB 106 can comprise a gNB-CU-CP, multiple gNB-CU-UPs and multiple gNB-DUs. The gNB-CU-CP is connected to the gNB-DU 152 through the F1-C interface and to the gNB-CU-UP through the E1 interface. The gNB-CU-UP is connected to the gNB-DU 152 through the F1-U interface and to the gNB-CU-CP through the E1 interface. One gNB-DU 152 is connected to one gNB-CU-CP and one gNB-CU-UP is connected to one gNB-CU-CP. FIG. 4 shows an example of an NG-RAN Architecture as described in 3GPP TS 38.401. FIG. 5A shows an example of a Separation of CU-CP (CU-Control Plane) and CU-UP (CU-User Plane) as described in 3GPP TS 38.401.

A Layer 2 (L2) of 5G NR is split into the following sublayers is described in 3GPP TS 38.300):

o Medium Access Control (MAC): The MAC sublayer offers Logical Channels (LCs) to the RLC sublayer. This layer runs a MAC scheduler to schedule radio resources across different LCs (and their associated radio bearers).

○ Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

o Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.

○ Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink) packets).

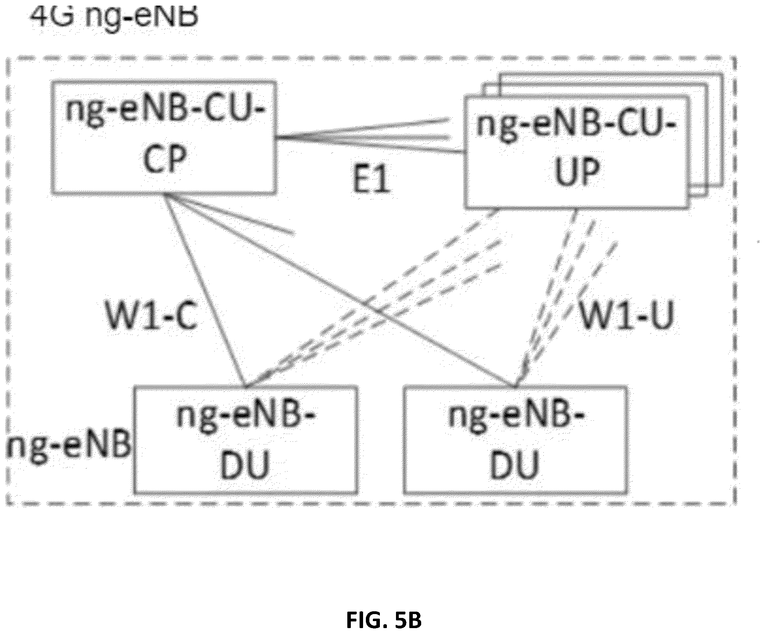

FIG. 5B shows an example of a Separation of 4G CU-CP (CU-Control Plane) and CU-UP (CU-User Plane).The example shown in FIG. 4B shows ng-eNB but legacy eNB also applies same architecture.

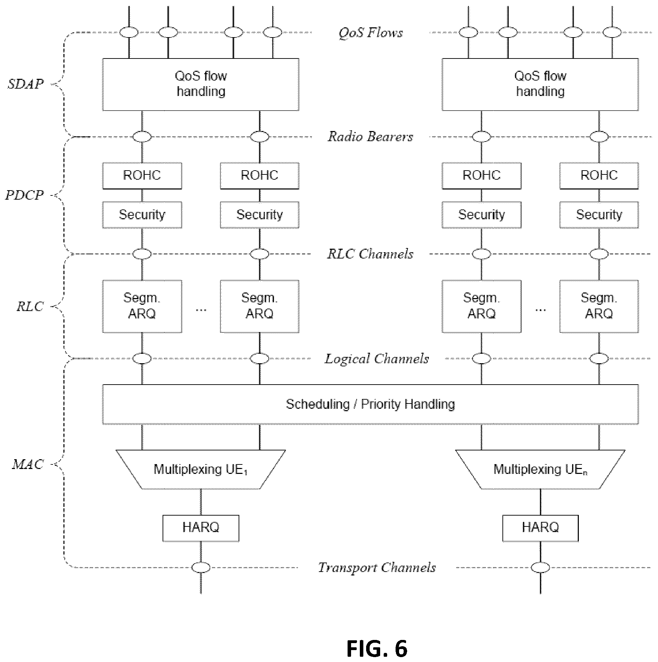

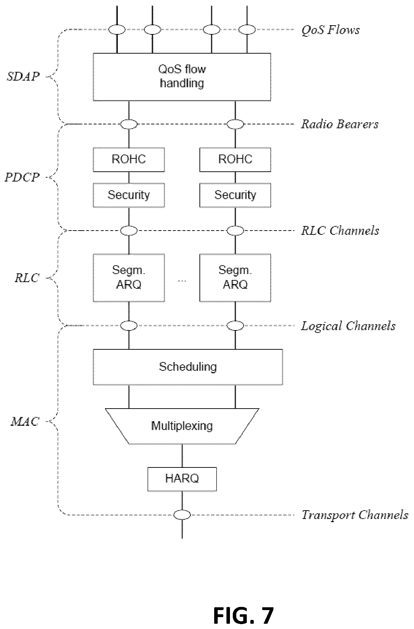

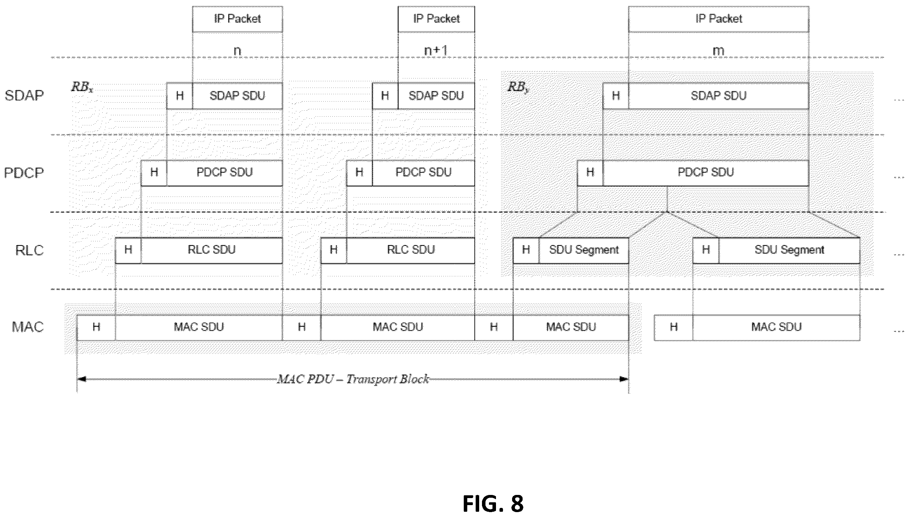

FIG. 6 shows a DL (Downlink) Layer 2 Structure as described in 3GPP TS 38.300. FIG. 7 shows an UL (uplink) Layer 2 Structure in accord with 3GPP TS38.300. FIG. 8 shows an L2 Data Flow example in accord with 3GPP TS 38.300 ([H] denotes headers or subheaders in FIG. 8.)

O-RAN, which is based on disaggregated components and connected through open and standardized interfaces, is based on 3GPP NG-RAN. An overview of O-RAN with disaggregated RAN (CU, DU, and RU), near-real-time RIC and non-real-time RIC is shown in the figure below. Here, DU (Distributed Unit) and CU (Centralized Unit) are typically implemented using COTS (Commercial off-the-shelf) hardware.

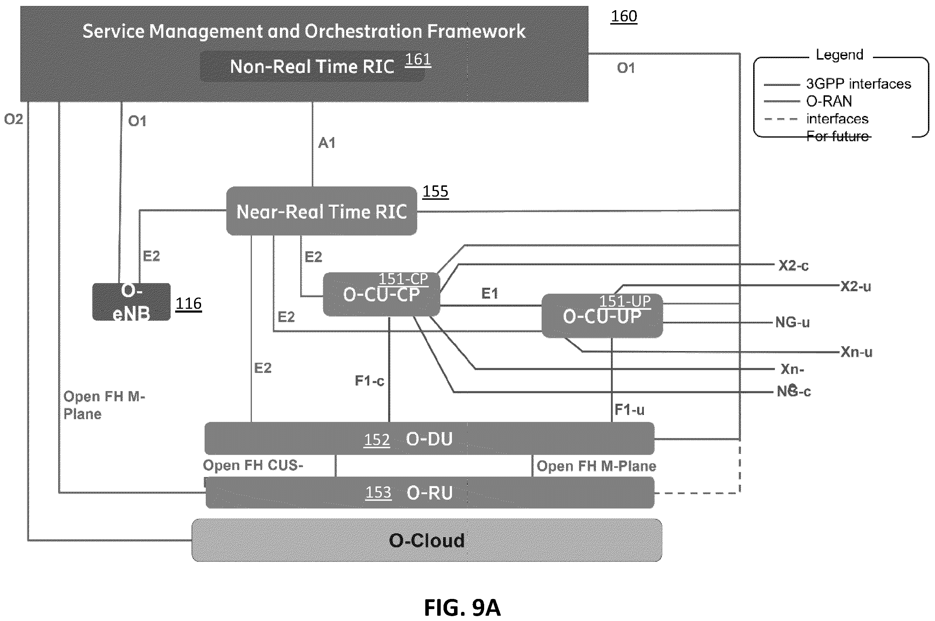

FIGS. 9A-9B show an example of an O-RAN architecture. In FIG. 8A, the CU and the DU are connected using the F1 interface (with F1-C for control plane and F1-U for user plane traffic) over the midhaul (MH) path. One DU can host multiple cells (for example, one DU can host 24 cells) and each cell can support many users. For example, one cell can support 600 RRC connected users and out of these 600, there can be 200 Active users (i.e.; users which have data to send at a given point of time).

A cell site can comprise multiple sectors and each sector can support multiple cells. For example, one site can comprise three sectors and each sector can support 8 cells (with 8 cells in each sector on different frequency bands). One CU-CP can support multiple DUs and thus multiple cells. For example, a CU-CP can support 1000 cells and around 100,000 UEs. Each UE can support multiple DRBs and there can be multiple instances of CU-UP to serve these DRBs. For example, each UE can support 4 DRBs, and 400,000 DRBs (corresponding to 100,000 UEs) can be served by five CU-UP instances (and one CU-CP instance).

DU can be located in a private data center or it can be located at a cell-site too. CU can also be located in a private data center or even hosted on a public cloud system. DU and CU can be tens of kilometers away. CU can communicate with 5G core system which can also be hosted in the same public cloud system (or can be hosted by a different cloud provider). RU (Radio Unit) is located at cell-site and communicated with DU via a fronthaul (FH) interface.

The E2 nodes (CU and DU) are connected to the near-real-time RIC 155 using the E2 interface. The E2 interface is used to send data (e.g., user, cell, slice KPMs) from the RAN, and deploy control actions and policies to the RAN at near-real-time RIC 155. The application or service at the near-real-time RIC 155 that deploys the control actions and policies to the RAN are called xApps. The near-real-time RIC 155 is connected to the non-real-time RIC 161 using the A1 interface.

SMO 160 manages multiple regional networks, and O-RAN NFs (O-CUs 151, Near-RT RIC 155, O-DUs 152) can be deployed in a regional data center that is connected to multiple cell sites or in cell site which is close to localized O-RU 153 according to network requirements. Since SMO 160 Functions and O-RAN NFs are micro services and deployment-independent logical functions, SMO 160 Functions and O-RAN NFs can be composed of multiple deployment instances deployed in the same O-Cloud or in a different O-Cloud in regional data center, or in cell site according to network requirements (ex. capacity, latency, security, and so on) if the secure connection among SMO160 Functions and O-RAN NFs are available.

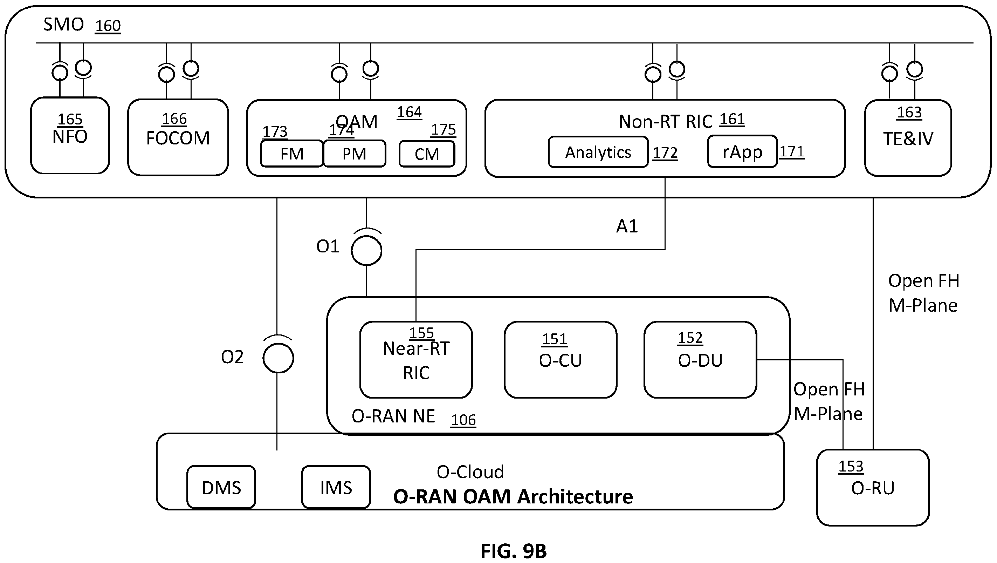

As shown in FIG. 9B, an O-RAN compliant SMO 160 defines TE&IV 163, RAN NF OAM 164, Non-RT RIC 161, and NFO165, FOCOM services 166. SMO 160 interacts with O-RAN NFs with O1 interface. SMO interacts with O-RU 153 with Open FH M-Plane interface and interacts O-Cloud via the 02 interface. O-RAN NF OAM 164 manages O-RAN NF CM, FM, PM and creates O-RAN NF inventory and topology in TE&IV 163. FOCOM/NFO 166 manages O-Cloud resources and creates O-Cloud resources inventory and topology in TE&IV 163. Analytics/rApp in Non-RT RIC 161 can subscribe O-RAN NFs PM/FM, O-Cloud PM/FM data based on O-RAN NF OAM and FOCOM 166/NFO 165. Analytics/rApp in Non-RT RIC 161 can retrieve the O-RAN NF and O-Cloud resource inventory and topology.

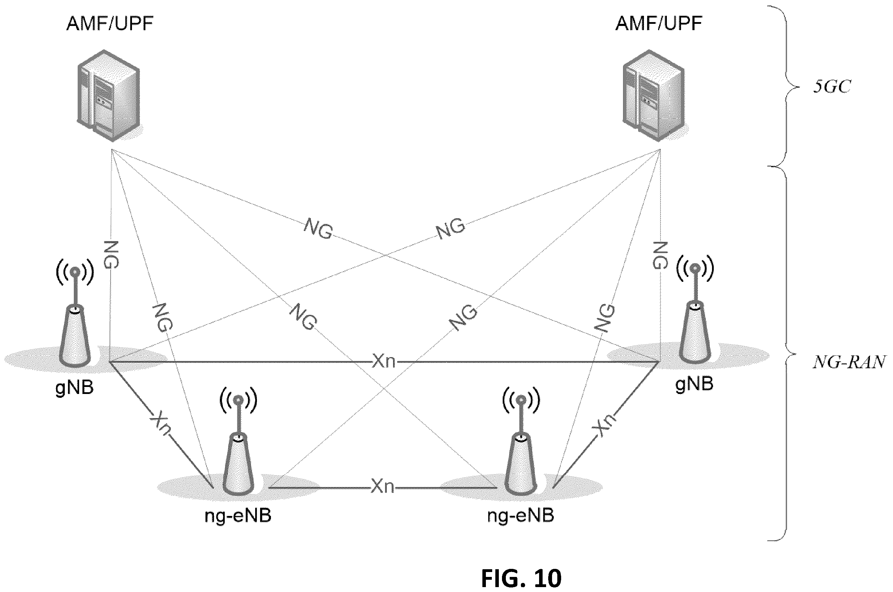

An E-UTRAN architecture is illustrated in FIG. 10. The E-UTRAN comprises of eNBs, providing the E-UTRA U-plane (PDCP/RLC/MAC/PHY) and control plane (RRC) protocol terminations towards the UE. The eNBs are interconnected with each other by means of the X2 interface. The eNBs are also connected by the S1 interface to the EPC (Evolved Packet Core), more specifically to the MME (Mobility Management Entity) by the S1-MME interface and to the Serving Gateway (S-GW) by means of the S1-U interface. The S1 interface supports a many-to-many relation between MMEs/Serving Gateways and eNBs.

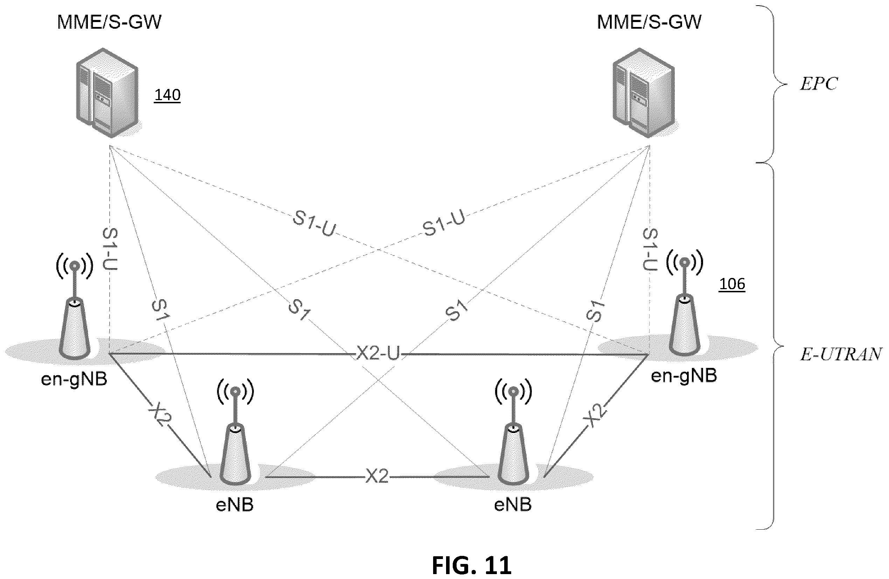

E-UTRAN also supports MR-DC via E-UTRA-NR Dual Connectivity (EN-DC), in which a UE is connected to one eNB that acts as a MN and one en-gNB 106 that acts as a SN. An EN-DC architecture is illustrated in FIG. 11A. The eNB is connected to the EPC 140 via the S1 interface and to the en-gNB 106 via the X2 interface. The en-gNB 106 might also be connected to the EPC 140 via the S1-U interface and other en-gNBs 106 via the X2-U interface. In EN-DC, an en-gNB 106 comprises gNB-CU 151and gNB-DU(s)152.

E-UTRAN also supports and NG-RAN architecture. An NG-RAN node is either:

a gNB, providing NR user plane and control plane protocol terminations towards the UE; or

an ng-eNB, providing E-UTRA user plane and control plane protocol terminations towards the UE. (3GPP TS 38.300 17.3.0.)

As shown in FIGS. 10-11, the gNBs 106 and ng-eNBs are interconnected with each other by the Xn interface. The gNBs 106 and ng-eNBs are also connected by the NG interfaces to the 5GC, more specifically to the AMF (Access and Mobility Management Function) by the NG-C interface and to the UPF (User Plane Function) by the NG-U interface. The gNB and ng-eNB host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity. Tight interworking between NR and E-UTRA. NB-IoT UE is supported by ng-eNB.

The gNB 106 and ng-eNB host functions such as functions for Radio Resource Management: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; and Dual Connectivity.

In an example, control information (e.g., scheduling information) can be provided for broadcast and/or multicast operation. The UE can monitor different bundle sizes for the control channel depending on the maximum number of repetitions.

*Description of Implementation*

Emerging 4G and 5G NR cellular systems constantly improve the SNR at the receivers in both gNB and UEs sides, and thus throughput performance on both sides, reaching longer distances and more UEs with much higher data rates. One of the main methods to increase the SNR performance improvement is achieved by using multiple antennas in the gNB. For many years the multi-antennas in the base-station (BTS) were used to increase the throughput by using parallel streams to and from a single UE (and vice versa). This method was called Multiple-In-Multiple Out (MIMO). Over the years there were different precoding methods proposed and employed in both the cellular and Wi-Fi standards (e.g., using codebooks, etc.). Over the years multiple antennas were used to form a beam. The beams were formed digitally by aligning their phases in a way that the amplitude at the UE will be constructively added, increasing the gain (e.g., doubling the amplitude at the receiver input with 6dB gain is achieved by doubling the number of the antennas used in the beamforming). The beam can be formed using Channel State Information (CSI) either received from the UE side or through using channel reciprocity. A more advanced MIMO method for increasing the plurality of the spatial beams is through Massive-MIMO. As its name suggests, Massive-MIMO significantly increases the number of antennas used to create multiple MIMO beams reaching one or more UEs simultaneously, reusing the same time and frequency, but separated by space. In addition to the use of polarization (e.g., vertical/horizontal, or left/right circular), the Massive-MIMO beams can be formed in the same polarization space. Hence, multiple Massive-MIMO beams can be formed in each polarization separately. The number of antennas per Massive-MIMO can be anything from 8 to 64 antennas and above.

As discussed herein, the main challenge is the alignment of the multiple antennas to form the beam. The maximum beam alignment is achieved by aligning three parameters: Gain, Delay, and Phase. Hence, prior to forming the beam by a plurality of antennas, at any direction, each antenna needs to be equalized to the other antennas through the three above parameters criteria.

As also discussed in herein, the process is divided into two main steps:

(1) **Factory Calibration:** This step is performed in the factory as part of the RU manufacturing validation process. It is employed to obtain the internal coupling network used for antenna calibration.

(2) **Run-time Calibration:** Once the internal coupling network parameters are derived by the factory calibration, the system can use the internal coupling network values to align the antennas while in operation in the field. There is also a need to constantly update the antenna calibration parameters every few minutes/seconds since the Tx and Rx RF chain parameters are also dependent on temperature and the change of the RF components characteristics.

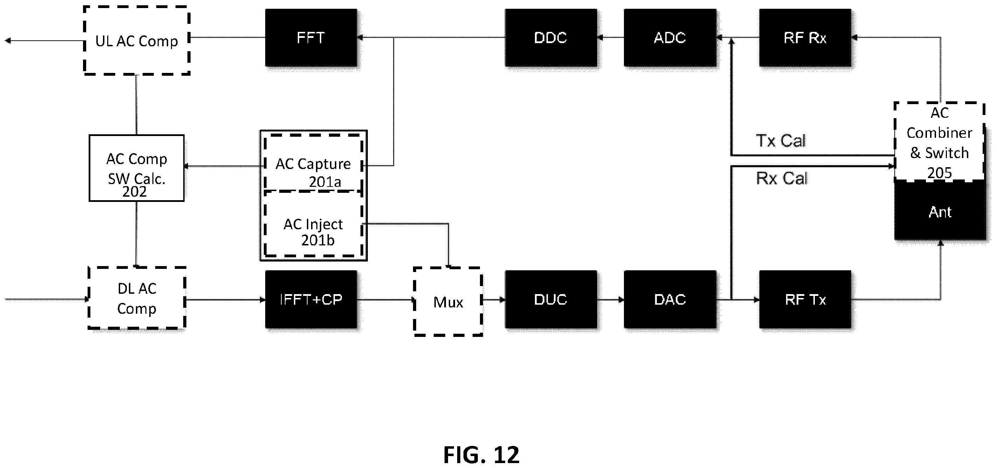

FIG. 12 is an antenna calibration block diagram as added to the conventional OFDM based communication system. The components in dashed blocks in FIG. 12 represent the added antenna calibration blocks to the OFDM system. FIG. 12 only shows one Tx/Rx chain out of all Massive-MIMO antenna 209 chain (e.g., 32 chains) and AC Combiner 210. The antennas calibration process is divided into two parts:

(1) Antenna Calibration Parameters Estimation: Processed by an AC Inject/Capture block 201 and an AC/IS SW 210.
(2) Antenna Calibration Compensation: Processed by AC Comp SW calculation block 202 and the SW 210.

In most systems, the AC parameters are obtained through injecting a unique sequence through the Tx and Rx chain for Tx Calibration and Rx Calibration respectively, that can be captured and correlated with the injected sequence to obtain the Tx/Rx chain Gain, Delay and Phase parameters. In some cases, the selected injecting sequence is based on Zadoff-Chu (ZC) sequence whose length is optimized to the system BW (e.g., 50MHz, 100MHz, and so on). Due to the nature of the run-time antenna calibration process, where there is a need to inject and capture ZC sequences from the Tx path to the Rx path as depicted in FIG. 12, the process is to be executed during a quiet time where neither signal transmission nor signal reception is performed. In 5G-NR Time Division Duplex (TDD) systems, there is such a quiet time when the system switches between the DL and UL slots. The quiet time is called Guard Period (GP) during the special slot, and it lasts for a few symbols.

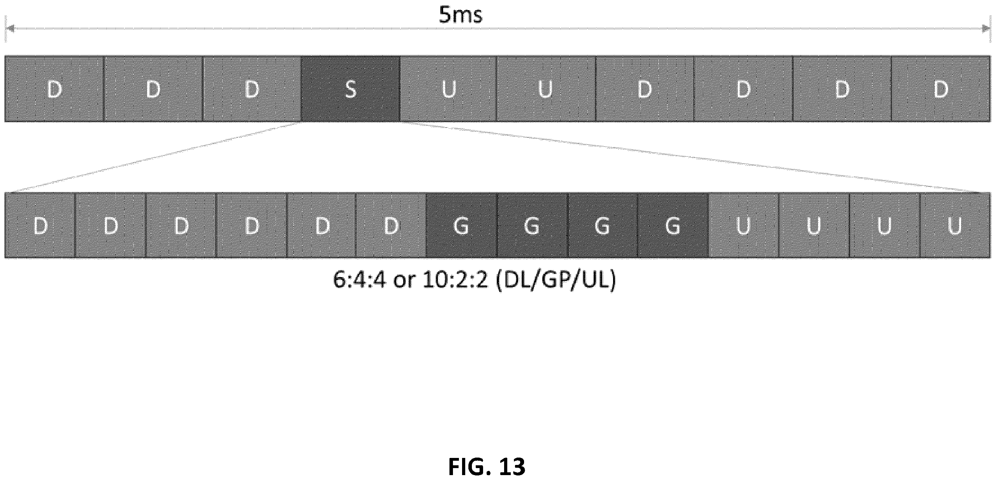

FIG. 13 describes the 5G NR Frame Format for Sub-Carrier Spacing (SCS) of 30 KHz ($\mu$ =1). The AC inject and capture are executed only during the Guard Period every 5ms. The hardware and software process the captured ZC sequence and calculate the AC compensation gain and phase for each antenna. As shown in FIG. 12, the ZC sequence AC inject 201b and AC capture 201a are processed in OFDM time-domain, however, the AC compensation is processed in OFDM frequency-domain. Hence, the hardware or software converts the captured ZC sequence to frequency domain prior to performing the cross correlation with the injected ZC sequence and the AC comp. FIG. 13 provides the Tx/Rx (DL/UL) ZC capture cross correlation gain/phase results in OFDM-based frequency-domain for 32 Massive-MIMO antennas. The AC inject and capture are executed only during the Guard Period every 5ms. The hardware and software process the captured ZC sequence and calculate the AC compensation gain and phase for each antenna.

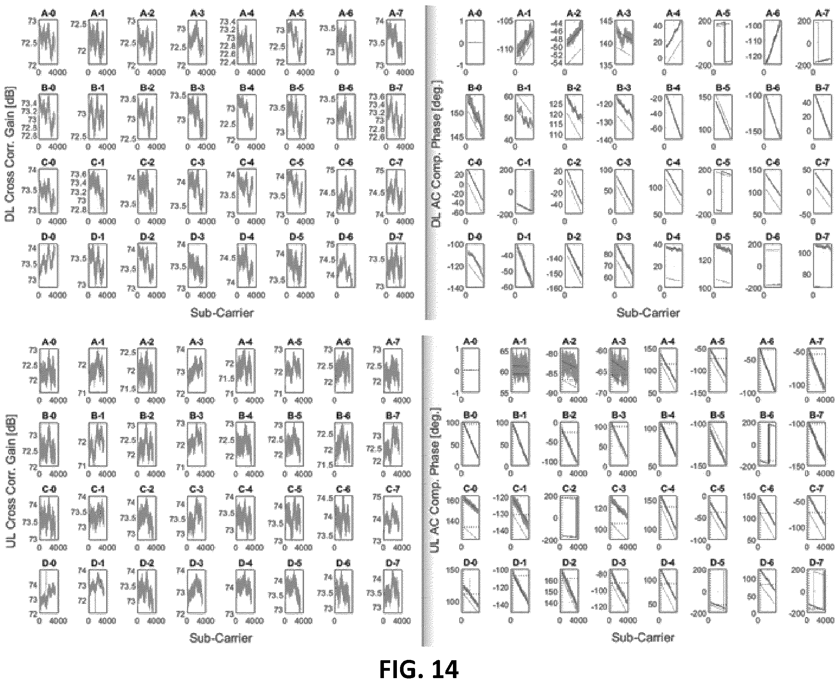

As also shown in FIG. 12, the ZC sequence AC inject 201b and AC capture 201a are processed in OFDM time-domain, however, the AC compensation is processed in OFDM frequency-domain. Hence, the hardware or software is to convert the captured ZC sequence to frequency domain prior to performing the cross correlation with the injected ZC sequence and the AC comp. FIG. 14 provides the Tx/Rx (DL/UL) ZC capture cross correlation gain/phase results in OFDM-based frequency-domain for 32 Massive-MIMO antennas. The cross-correlation result between the injected and captured ZC sequence for each antenna provides its Tx/Rx channel represented in gain and phase within the radio unit (RU). As can be seen from FIG. 14, the gain for all the 32 Antennas is similar with up to $\pm$ 1 dB variation. The Tx/Rx phase for each antenna is referenced to Tx/Rx antenna 0 (A-0).

The present disclosure advantageously addresses the problem of how to monitor and maintain the full functionality and maximum power efficiency from the Massive-MIMO RU in the field, in terms of efficiently monitoring Tx/Rx component functionality, as well as detecting over-the-air (OTA) interferences and even cancelling them. The Massive-MIMO RU digital and analog operation depends on the following:

- **Plurality of Tx/Rx Antenna Chains** - Due to the plurality of the Tx/Rx antenna chain in Massive-MIMO, there is a need to constantly monitor and report the condition and functionality of these antenna chains, which includes:

  - The digital domain (in ASICs/FPGAs),
  - Mixed signals (DACs/ADCs), and
  - Analog domain (Pre/PAs and LNAs).

The present disclosure also addresses a need to get real-time RU diagnostics with minimum overhead, power, and no system interruption including:

- **Antenna Calibration** -check the performance of the antenna calibration in real-time in the field. A need to constantly monitor and report the Massive-MIMO antenna alignment quality:

  - Gain: the gain alignment between all the Massive-MIMO antenna chains.
  - Phase: phase alignment for multiple pie samples.
  - Delay: The balance between the antenna chains delays. Within RUs, Digital Frontends (DFEs), and Tiles (within DFEs).
  - PRACH phase: The phase alignment between the AC phases at the PRACH offset.

- **Hardware Impairments** - A need to constantly check the Massive-MIMO Tx/Rx chains hardware for:

  - Gain and Adjacent Channel Leakage Ratio (ACLR)
  - Gain Flatness over the BW
  - Freq./Phase stability and offsets.

- **Interferences** - A need to monitor each RU in the field for external and internal EMIs:

- Use the RU Massive-MIMO Rx chains to detect the interference and even cancel it. The need is for both full-band and partial-band interferences.

An aggressor can come in different types and can have multiple types at the same time:

1. Persistent or temporal
2. Partial-band or full-band
3. High-gain to low-gain
4. Synced or not synced to 3GPP frame format or GPS.
5. Fixed frequency or dynamic frequency
6. In-channel to mixed in/out of channel
7. Angle-of-Arrival (AoA) to the RU compared to other UEs' AoAs.

In Massive-MIMO based communication, there are mainly two types of beams: (1) Common-beams that are usually wide-angle beams covering most of the RU sector connecting to most/all UEs within the sector range. Common beams are usually fixed beams created by fixed beamforming weights in the gNB 106 (DU or RU). (2) User-beams that are usually narrow angle beams directed to a specific UE or a group of UEs 101. User-beams are usually dynamic beams created by dynamic beamforming weight in the gNB 106 (DU or RU). The weights are determined by a closed-loop preamble or reference signals (RS) that are sent either by the RU (Channel State Information RS - CSI-RS) or the UE (Sounding RS - SRS) that are employed to estimate the RU/UE channel.

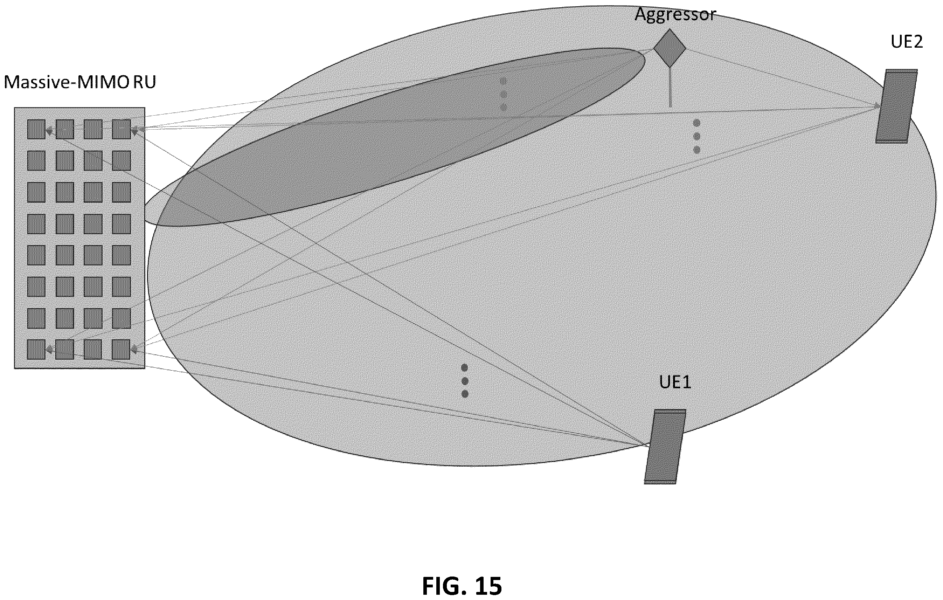

FIG. 15 is an example for a typical Massive-MIMO communication scenario, where a Massive-MIMO RU with 32 antennas is connected through a common beam to multiple UEs. Together with the common beam, there is also an external aggressor that interferes the RU/UEs communication.

In the example of FIG. 15, the aggressor is closer in its Angle-of-Arrival (AoA) towards the RU to UE2 than UE1. Hence, it can be wrongly assumed that the interference affects the communication to UE2 more than UE1. However, the aggressor affects the common beam equally for UE1 and UE2 by equally increasing the interference level in the receiver that, depending on the interference type, can be interpreted as an increased noise level and reduced Signal-to-Interference and Noise Ratio (SINR) level. The main question is if this directional interference can be first identified by the parameters given above. Then, it will be beneficial if this interference can be cancelled is a way that will minimize the effect on the communication to both UE1 and UE2.

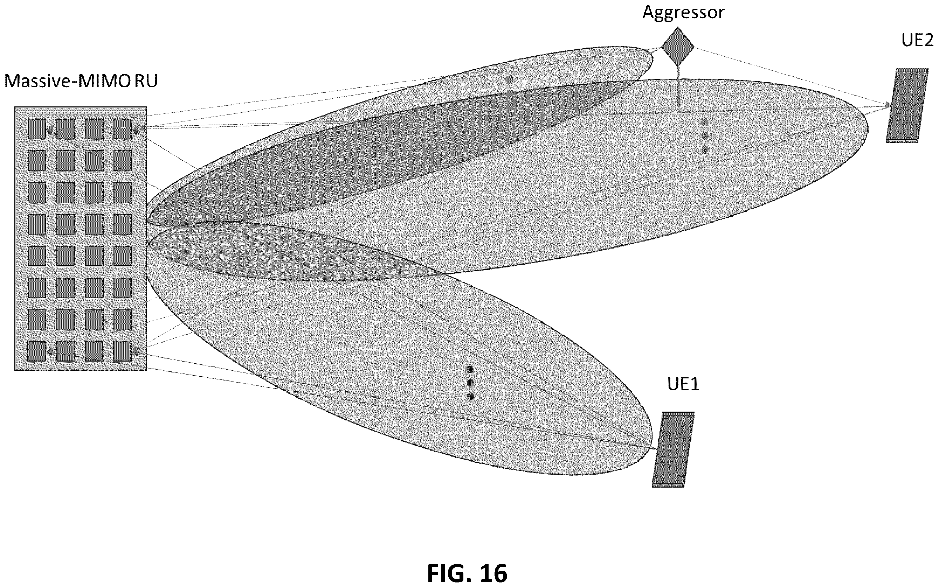

FIG. 16 is another example for a typical Massive-MIMO communication scenario, where a Massive-MIMO RU with 32 antennas is connected through multiple beams to multiple UEs. Together with these beams, there is an external aggressor that interfere the RU/UEs communication. Same as in the case of common beam shown in FIG. 15, in the example of FIG. 16, the aggressor is closer in its Angle-of-Arrival (AoA) towards the RU to UE2 than UE1. Hence, it can also be assumed that the interference affects the communication to UE2 more than UE1. In that case, the beam to UE1 is less affected by the aggressor than UE2. The main question in this case is whether there can be a way to distinguish the aggressor from the beam to UE2. Particularly, if even in this case, this directional interference can be first identified by the parameters given above. Then, same as in the common beam case, it will be beneficial if this interference can be cancelled in a way that will minimize the effect on the communication to both UE2 and of course to UE1.

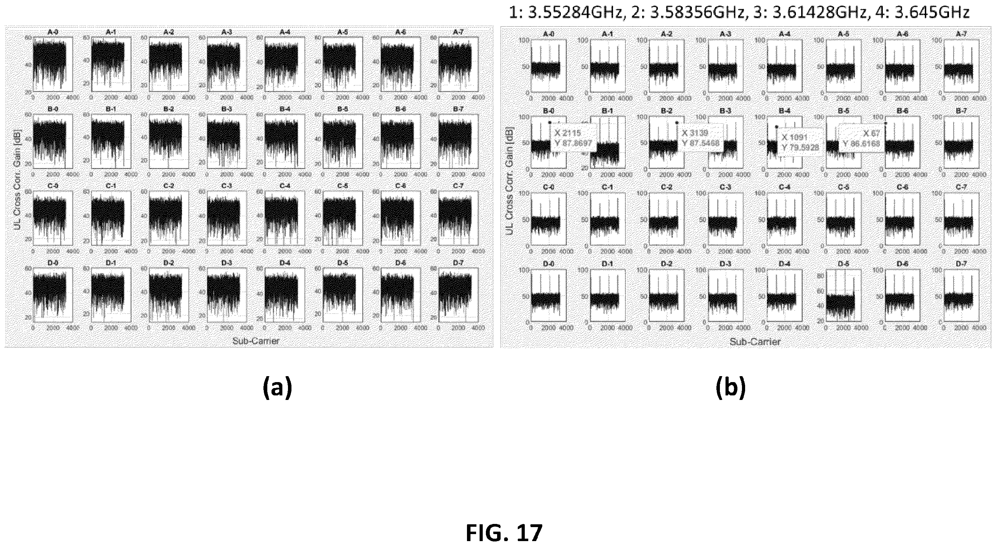

FIGS. 17-20 provide some examples of different types of interferences from the lab and field.

FIG. 17 depicts two scenarios from the lab: 1. (a) The reference of the Rx AC gain for 32 antennas when no interference exists in the sector. The AC cross-correlation gain on all antennas is around 50-55 dB. 2. (b) The Rx AC gain when two persistent sinewave interference signals are received in all RU antennas ports. In this case, the sinewave signals were generated by an external signal generator. The two sinewave signals are represented by four tones in the Rx AC frequency domain. The gain of the two sinewave signals is around 30-35 dB above the noise floor.

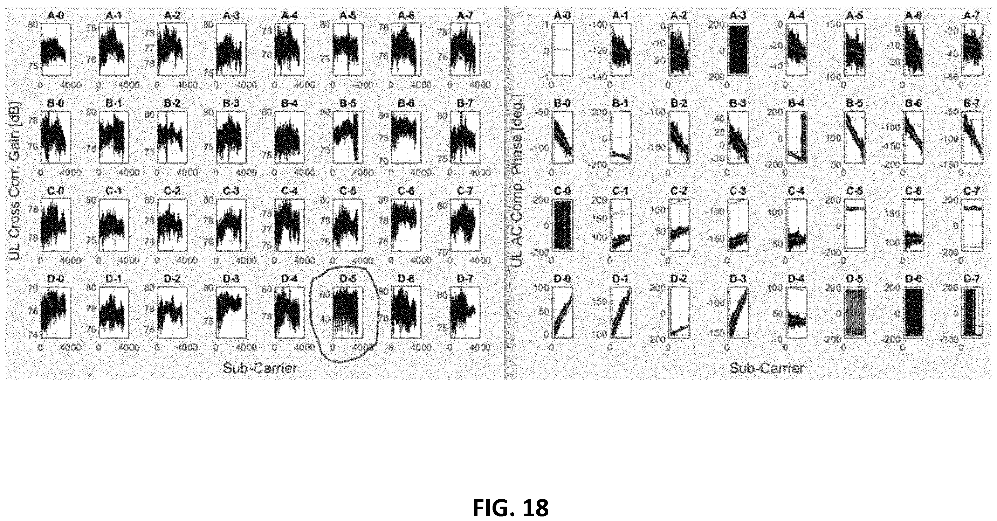

FIG. 18 describes the effect of a ducting interference from the field. Ducting interference is an interference that comes from a certain direction (e.g., North, etc.) from distant telecommunication systems operating in the same carrier frequency and band. Ducting interference characteristics are similar to Additive White Gaussian Noise (AWGN) with equal gain throughout the bandwidth (BW). Ducting interference is shown FIG. 18 on antenna D-5, where no ZC sequence is injected and the gain is still ~60 dB which is ~20 dB higher than the noise floor (in the field the noise floor is ~40 dB). Ducting interference is also a persistent interference that can last for more than 12 hrs. a day.

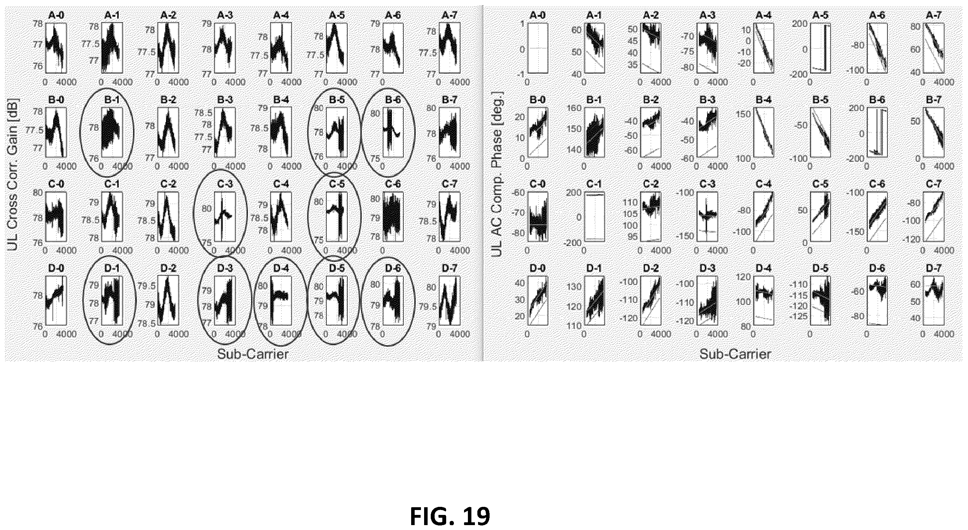

FIG. 19 represents another type of interference: a sub-band temporal interference. In FIG. 19, the sub-band interference is not presented on all antennas since each antenna is captured on a different guard period (GP). Hence, there are different types and bandwidths of sub-band interferences shown on different antennas.

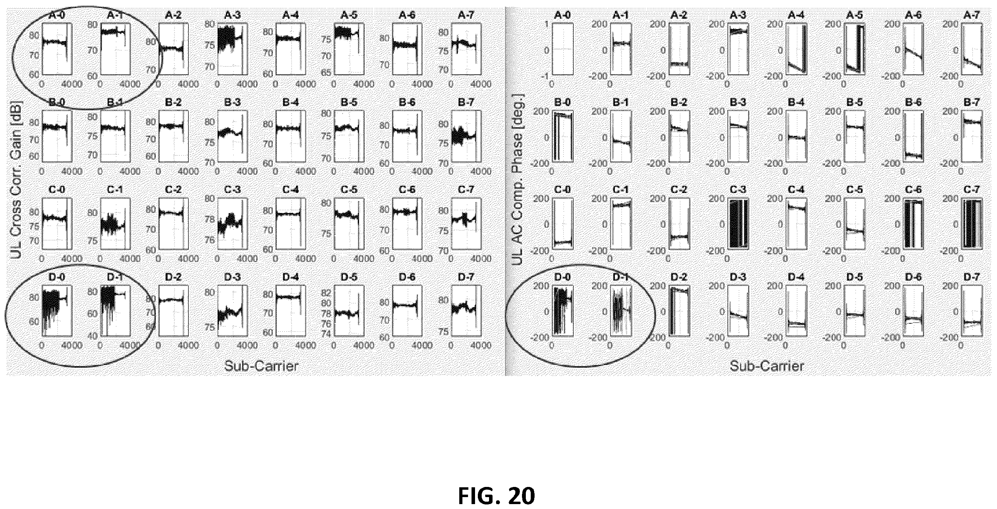

FIG. 20 represents another type of interference: a mix of sub-band temporal and persistent interference. In FIG. 20, the sub-band temporal interference shown in D-0 and D-1 is not present on all antennas. However, the narrow sub-band interference on the bandwidth edges appears on all antennas and thus is persistent.

As of the present disclosure, there are several methods to collect RU diagnostics.

**PUSCH/DMRS** - Uses the multi-layer channel estimation to detect the Rx chain quality. It can only diagnose the channel of the layers after uplink beam forming from all the Massive-MIMO pipes. Usually only 2 layers (1 per polarization) are scheduled. This cannot be used for single pipe diagnostics or Tx chain diagnostics. This also cannot detect in-channel interferences: UL DMRS 3 layers or 4 layers does not have empty SCs.

**SRS** - Uses the UL FH PCAP to detect the channel of all the Massive-MIMO pipes. SRS requires exposing all the pipes to the FH PCAP which significantly increases the FH bandwidth. It cannot be used for Tx chain diagnostics. Nor can SRS detect in-channel interferences since SRS usually occupies the whole BW to save FH bandwidth.

**GP FH** - Uses the guard period to detect Rx interferences. GP FH requires exposing all the pipes to the FH PCAP which significantly increases the FH bandwidth. It cannot be used for Tx chain diagnostics. GP FH is also used for antenna calibration in the RU which can mask the interferences and reduces the effectiveness of the GP FH.

**Reduced FH BW Diagnostics** - Uses different compression (e.g., averaging, etc.) methods to reduce the bandwidth on the FH. This reduces the granularity and resolution of the diagnostics that leads to reduced performance.

**ACLR** - None of the above methods can be used to measure the Tx ACLR. Can only be checked with ext. equipment (Spectrum Analyzer, and the like)

A purpose of the disclosed systems and methods described herein are to obtain maximum RU diagnostics and interference information and apply estimation, corrections/mitigations, and cancellation with minimum to no impact on the other parts of the gNB.

In an implementation, a method and system for RU diagnostics, including data capturing/gathering, includes the following advantages. Implementation as described herein uses the AC mechanism that already exists in the Massive MIMO RUs for RU diagnosis. For Tx chain performance: the system AC runs the AC Tx calibration (AC Tx cal) and save the capture. The system also calculates the Tx gain over the channel BW and check for gain level and flatness. ACLR can be checked using AC over multiple CCs.

For Multi-DFE alignment, the system run the AC Tx cal and saves the capture. The system then checks phase slope over the BW higher than a threshold (e.g., > 90 deg. for 4x TDM or interpolation over sampling freq.) For Rx chain performance, the system runs the AC Rx calibration (AC Rx cal) and save the capture. The system calculates the Rx gain over the channel BW and checks for gain level and flatness.

For UL Interference, the system runs the AC Rx Cal Capture on all RU antennas and save the captures - no AC inject is needed. The system analyzes the captures for frequency components above the noise floor.

For each of the cases above, multiple samples can be run for each antenna. Each AC session can be performed by the joint antenna calibration method.

In an implementation, a method and apparatus for the RU estimation and correction is as follows: The system uses Antenna Calibration mechanism that already exists in the Massive MIMO RUs for RU HW Impairments Mitigation. For Tx chain performance: the system executes antenna gain and flatness equalization, including PA protection detection and applying gain equalization in AC compensation. For Multi-DFE Alignment, the systems performs sample-based Multi-DFE Alignment. For example, the system applies greater than 90 for 4x TDM /interpolation or greater than 360 degree AC phase compensation.

For Rx chain performance, the system executes antenna gain and flatness equalization and applies gain equalization in AC compensation.

For UL Interference, for a persistent interference, the system uses the analyzed interference components to be eliminated from the transferred data from each antenna to the FH and DU. AC compensation can be used to mitigate the interference for each layer (Beam-nulling). For each case above, the system can run multiple samples for each antenna. Each AC session can be performed by the joint antenna calibration method.

The description below discloses and describes implementation for interference information capturing and sensing, estimation, and cancelling. More information about the diagnostics is provided in the discussion of additional implementations for this disclosure.

The disclosed interference sensing and cancelling system and method is divided into 3 parts:

1. Interference Sensing
2. Interference Estimation
3. Interference Cancellation

**Interference Sensing:**

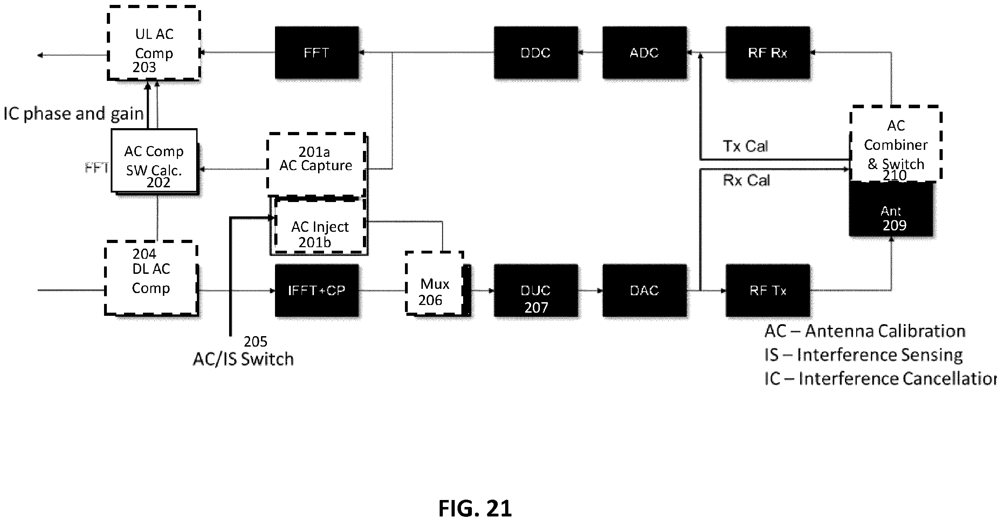

In an implementation, an AC circuit is reused to capture the interference. FIG. 21 shows a RU block diagram as shown in FIG. 12 and showing control signals for the interference sensing and cancelling to the AC blocks. The AC circuit already includes the AC inject 201b/AC capture 201a, UL AC compensation block 203 and DL AC compensation block 204. The method comprises:

(1) Set AC Inject/Capture switch control 205 to Interference Sensing (IS). In AC mode, the AC inject block 201b is used for injecting the ZC sequence to the Tx to capture it in the Rx via the multiplexer Mux 206. However, in IS mode, no signal is injected to allow sensing the external interference only.

(2) Run AC Rx calibration. In that case, nothing is injected to a DUC 207, but the AC capture 201a captures the received signal from the antennas 209 instead of the injected ZC sequence from the transmitter. The reason to run AC Rx cal, is because in RX cal the Tx PA (of antenna 0) is disabled, and the Rx LNAs (for all 32 antenna chains) are enabled. Hence, the received OTA signal including the interference is amplified by the LNA before entering the Rx digital side.

(3) The received signal (one symbol in time-domain) is captured in the AC capture block 201a, the same as the regular ZC sequence in the AC mode. The BW of the received signal is the same as the bandwidth of the carrier component (CC) the AC capture is configured to capture (e.g., 4096 samples for 122.88 Msps CC, or 2048 samples for 61.44 Msps CC).

(4) In the regular AC algorithm, the captured received signal in the AC capture block 201a memory is cross correlated with the AC injected signal programmed by the SW. However, in IS mode, since there is no injected signal, the cross correlation can support two modes:

    a. ZC sequence for the CC BW.
    b. Delta function in time-domain or multiplied with all soft strong "1" (e.g., 0x7FFF) in frequency-domain.

Each of the above cross corelated modes with the received signal can provide good performance to estimate the interference.

(5) The estimated interference can be converted (such as CORDIC) and represented either as a complex value or as gain and phase.

The interference sensing capture can be performed on all 32 antennas simultaneously to improve the accuracy of the interference estimation, especially in cases where the interference is not persistent, and it is only temporal. Hence, performing one interference capture for one antenna at a time can miss the temporal interference in some antennas and degrade the overall interference detection performance.

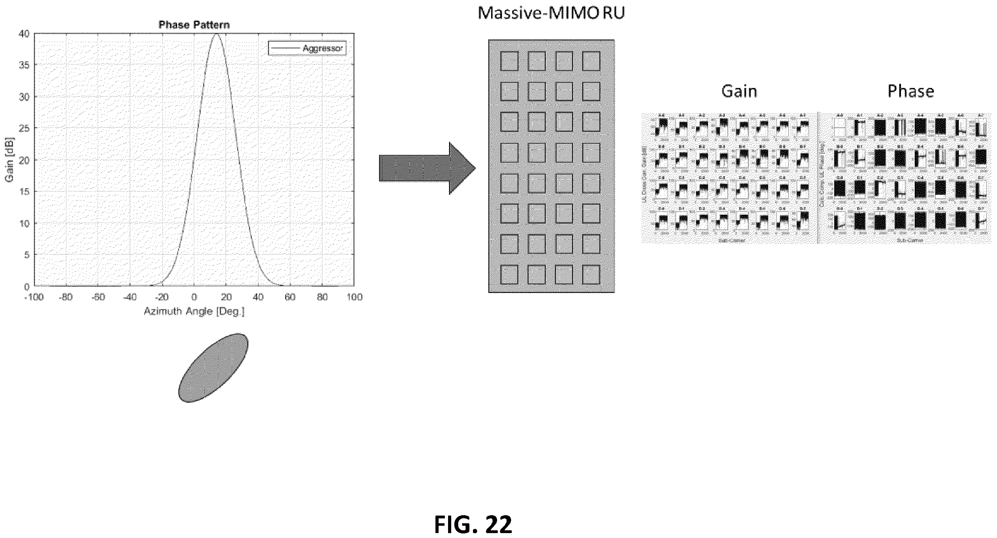

FIG. 22 shows an implementation of Interference/Aggressor Sensing using Massive-MIMO Antennas. The aggressor/interference in FIG. 22 has a gain of 40 dB at AoA of 14 degrees Azimuth. The aggressor beamwidth (3 dB) is 10 degrees. It occupies only part of the 100MHz BW. As shown in FIG. 22, the captured interfering signal phase can be correlated and successfully stable as between captures of different antennas sometimes even at different times. FIG. 22 also shows that capturing the interference in all 32 antennas simultaneously can improve the estimation of the interfering signals.

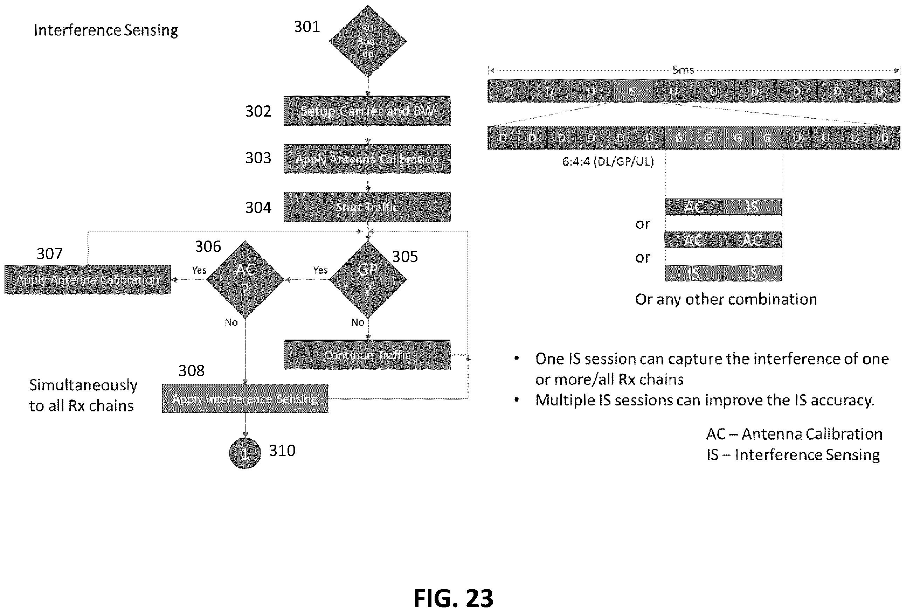

FIG. 23 presents the interference sensing flowchart as part of the antenna calibration process. As depicted in FIG. 23, the interference sensing process starts at block 301 boot up and at block 302 carrier setup. After booting up and carrier activation, at block 303 the first antenna calibration is executed. Once the antenna calibration process is finished for both the Tx cal and Rx cal, the AC compensation phases are written to the Tx and Rx AC Comp memories respectively. At that point, at block 304 the RU is ready to start the DL/UL traffic allowing efficient beamforming (BF) based on the beamforming weights (BFWs) programmed in the RU precoder. Hence, the next step is to start the Time-Division-Duplex (TDD) based traffic. A TDD format example is given in FIG. 23 where the antenna calibration (AC) detection at block 306 at calibration block 307 and the interference sensing (IS) at block 308 are performed during the guard period (GP) at block 305 during the S-Slot. When the S-Slot format is 6/4/4 (DL/GP/UL), there are 4 symbols dedicated for GP. Hence, there can be multiple (up to 4) combinations to implement both one symbol (including cyclic prefix - CP) of AC as well as IS in the same S-Slot. Some examples are given in FIG. 23. As explained in FIG. 23, multiple AC and IS symbols at multiple S-Slot sessions for a single antenna can be used to improve both the antenna calibration accuracy at block 307 as well as the interference sensing at block 308 (and therefore interference estimation and cancellation) performance. More detail is provided in the interference estimation section below. The flowchart of FIG. 23 ends at block 310 by capturing the received signal during the IS session. The next step is to estimate the interfering signal, discussed in the next section.

**Interference Estimation:**

The aggressor estimation is performed by:

    1. Reading the full BW (e.g., 100MHz) cross-correlated results from all 32 antennas.
    2. Include the past n 32 antenna IS readings.

3. Based on all the current and past 32 antenna readings, estimate the interference gain, phase, and derive the interference AoA.

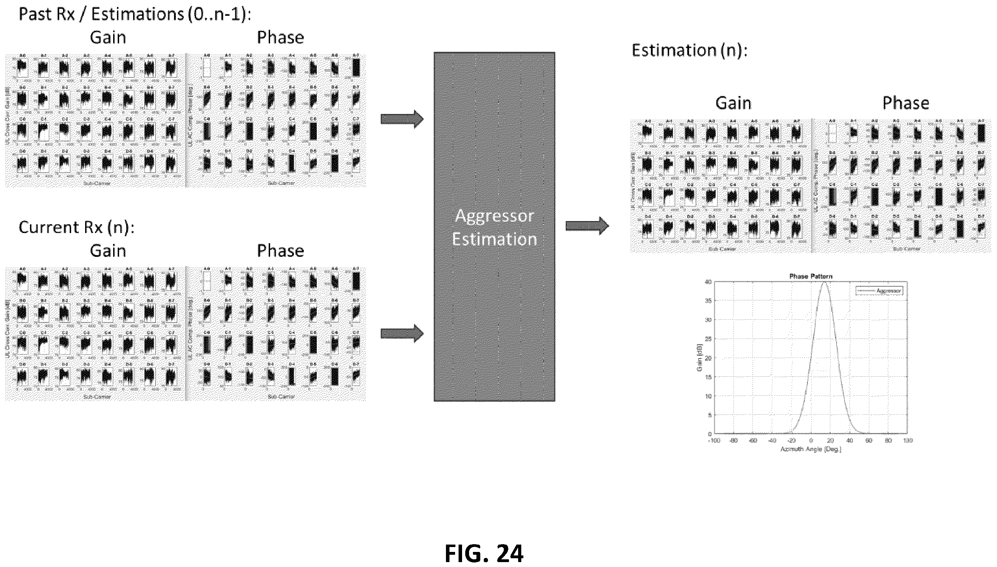

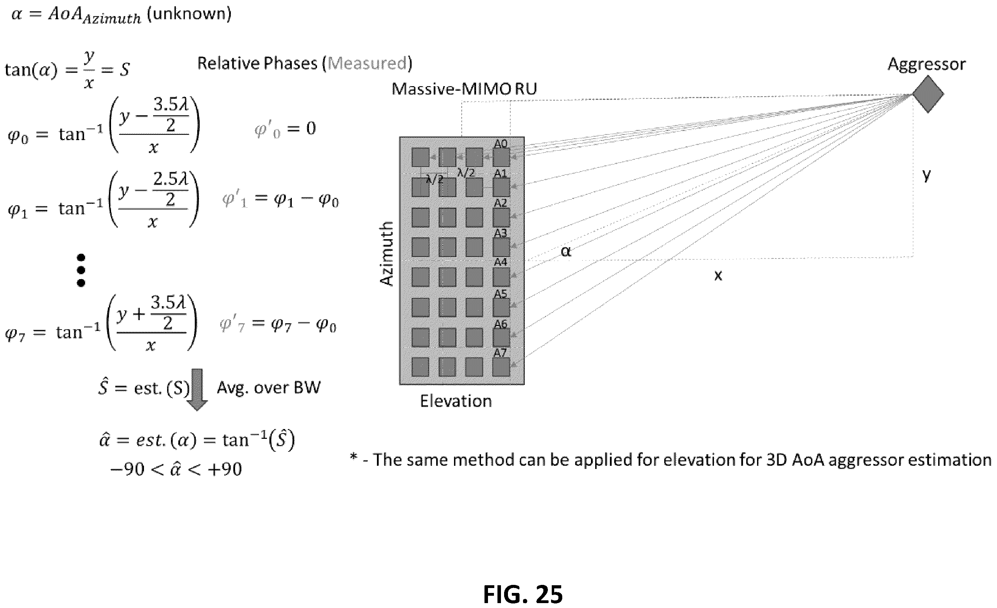

FIG. 24 depicts the interference/aggressor estimation block diagram. As shown in FIG. 24, the current interference sensing captures over all 32 antennas can be used together with previous n captures to estimate the gain, phase, and derive the AoA of the aggressor. FIG. 25 provides the method of which the aggressor AoA is estimated. The calculation for the AIA aggressor estimation can include the following:

$$\alpha = AoA_{Azimuth} \text{ (unknown)}$$

$$\tan(\alpha) = \frac{y}{x} = S \qquad \text{Relative Phases (Meas}$$

$$\varphi_0 = \tan^{-1}\left(\frac{y - \frac{3.5\lambda}{2}}{x}\right) \qquad \varphi'_0 = 0$$

$$\varphi_1 = \tan^{-1}\left(\frac{y - \frac{2.5\lambda}{2}}{x}\right) \qquad \varphi'_1 = \varphi_1 - \varphi_0$$

$$\vdots$$

$$\varphi_7 = \tan^{-1}\left(\frac{y + \frac{3.5\lambda}{2}}{x}\right) \qquad \varphi'_7 = \varphi_7 - \varphi_0$$

$$\hat{S} = est.(S) \quad \blacksquare \quad \text{Avg. over BW}$$

$$\hat{\alpha} = est.(\alpha) = \tan^{-1}(\hat{S})$$
$$-90 < \hat{\alpha} < +90 \qquad \qquad * \text{ -}$$

The advantage in Massive-MIMO RU is the plurality of the antennas and that the multi-antennas are spaced with a pre-defined fixed space between them usually at $\lambda/2$ distance. This defines the distance of each antenna element from the aggressor. The aggressor can be mobile but can assume a certain time-coherency where the aggressor is stationary and its location is fixed (low mobility) compared to the IS update rate (e.g., every 5ms). The disclosed method employs the IS stage relative phases $\varphi$ (can also use the earlier measured IS phases) for all the antennas to estimate $\alpha$ the azimuth AoA. To improve the AoA estimation, there can be averaging of the whole CC BW. The same methods can be applied for the elevation to provide the complete 3D Aggressor AoA. In addition, the interference gain estimation obtained from the interference sensing is per frequency-domain resource element (RE) which also helps with the interference cancellation which is discussed next.

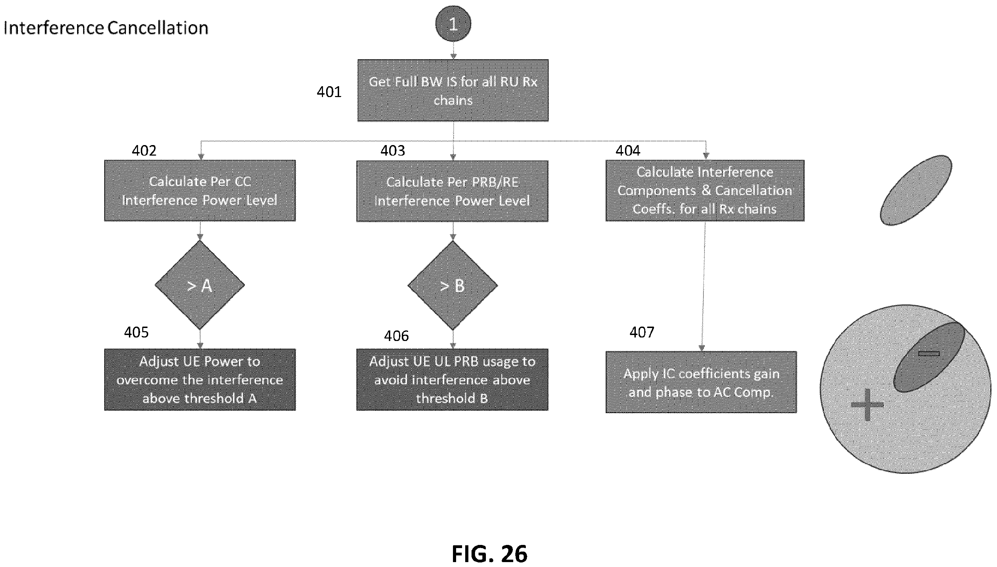

FIG. 26 depicts the final stage of the disclosed method flowchart, which is the interference cancellation. In FIG. 26, after capturing the IS from all the antennas, multiple interference avoiding and cancelling methods are disclosed.

The interference level can be obtained based on the interference sensing and estimation discussed above. At block 401 the full BW is obtained for all RU Rx chains. At block 402, the per CC interference level is calculated. Then, at block 405 for a per CC interference level greater than a certain threshold "A" above the noise floor, the base-station (gNB) can instruct the UEs allocated in the same direction of the interference AoA, to equally increase their transmitting power to maintain the connection throughput performance.

In addition to item (1), as discussed above with respect to interference sensing, at block 403 the interference sensing includes calculating a per RE or per the physical resource block (PRB) interference gain estimation per carrier component (CC). The per RE interference gain estimation can be used in the gNB to select the communication to the UE on certain REs in each CC. In some cases when the interference occupies only part of the BW in CC. In that case, at block 406 the gNB can instruct the UE to transmit at the REs where the interference level is below a certain threshold "B" above the noise floor.

Thes two methods involve the layers above the physical layer. The third interference cancellation method can be applied purely in the radio RU and does not need to involve either the DU or the FH connection between the DU and the RU.

This method suppresses the received gain in the same direction of the interference AoA derived in the interference estimation section. The process of the interference cancellation using its AoA is discussed in the next section using the simulation results of an example.

At block 404, the interference sensing calculates the interference for components can cancellation coefficients for all Rx chains. At block 407, the system is then configured to apply IC coefficients for gain and phase to AC compensation.

**Simulation Results:**

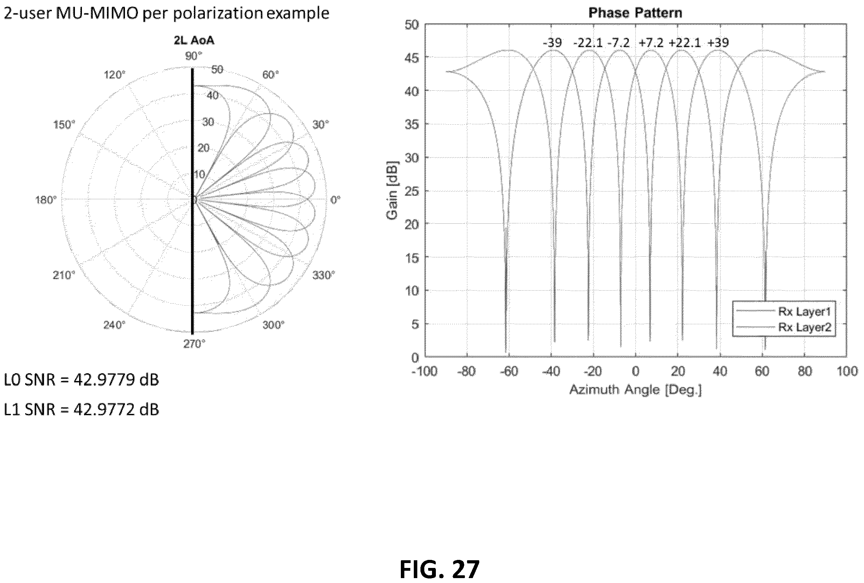

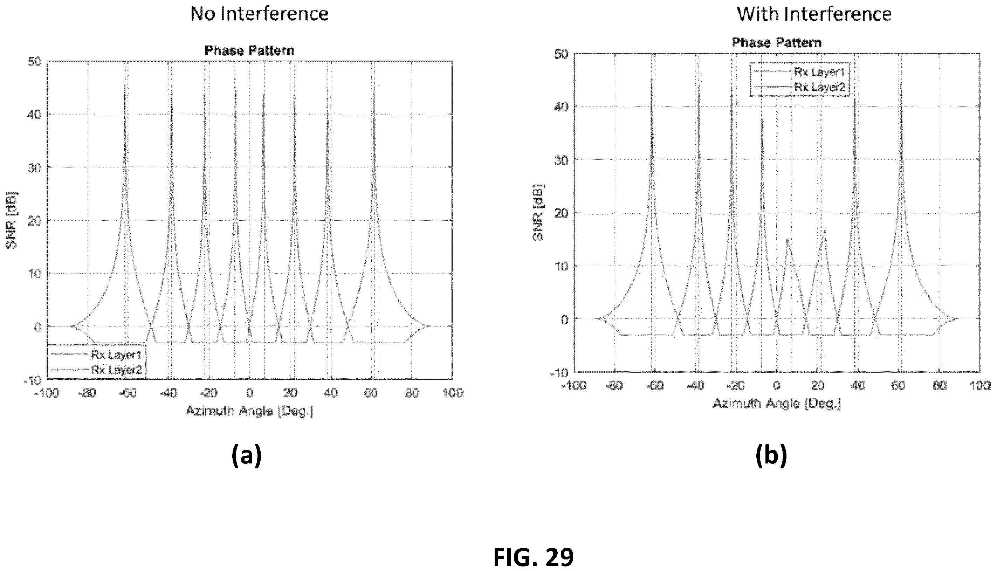

FIG. 27 describes a beamforming gain per AoA for a typical 2 layers (or 4 polarized layers) that can be used for either 4L single-user (SU)-MIMO or 4-user multi-user (MU)-MIMO. In FIG. 27, the presented example beams are considered user-beams (UB) since they have high directionality, however, the same can be applied to common-beams (CB) where there is (an almost) equal gain throughout most of the AoA range. The 2 layers per polarization are differentiated by their AoA are described at (L1) and (L2), where the AoAs of the max gain of L1: - 39, -7, and 22 degrees, are the nulls of L2, and the max gain AoAs of L2: -22, 7, and 39, are the nulls of L2. Hence, as depicted in FIG. 29(a), the potential max SNR at these angles for each layer separately, can reach > 40 dB which is higher than the RF SNR requirement in the RU. This > 40 dB layer separation enables the 2-layer MIMO detection. With polarization this UB separation can allow 4-layer detection.

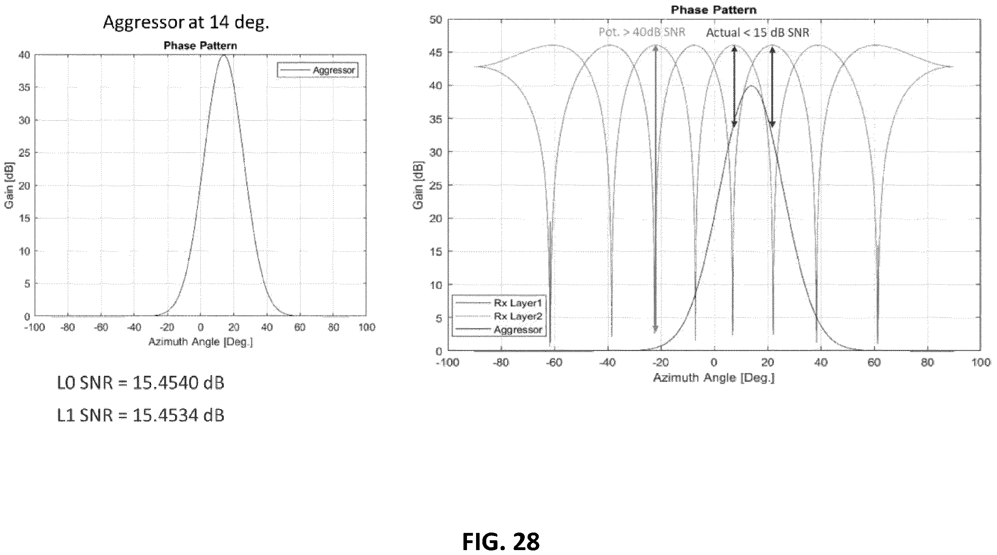

FIG. 28 presents the effect of the user-beam gain in the presence of an aggressor. The example aggressor depicted in FIG. 28 has a gain of 40 dB and at an AoA of 14 degrees. AoA of 14 degrees is in between 7 and 22 degrees which are the high gain AoAs for L2 and L1 respectively. The aggressor 3dB beamwidth is about 10 degrees. In that case, it significantly affects both layers at neighboring high gains at 7 and 22 degrees. Due to this aggressor and its beamwidth, the SINR (signal to noise and interference ratio) degrades from more than 40 dB to less than 15 dB (see FIG. 29(b)). When integrating the aggressor contribution to the entire noise level, the overall SINR for both layers is around 15.4 dB. It means that, if before the presence of the aggressor, with > 40 dB SNR, the potential throughput was equivalent to 3GPP 5G Table-2 MCS 27 256 QAM with high code rate (0.93) performance, after the appearance of the aggressor, with 15 dB SINR, the potential throughput was equivalent to MCS 16 64 QAM with a lower code rate (0.70) performance. It translates to throughput performance degradation of 43% due to the presence of the aggressor.

FIGS 29(a) and 29 (b) describe the per AoA SNR for the 2 layers. From FIG. 29(b) it is also shown that the overall max SNR with the presence of the aggressor can reach a bit higher than 15 dB around the max gain at 7 and 22 degrees for L2 and L1, respectively. As explained above in the interference estimation and cancellation sections, the interference gain and AoA can be estimated with high accuracy, hence, the interference cancellation can concentrate purely on the AoA where the interference is coming from with the attenuation that is equal to its estimated gain.

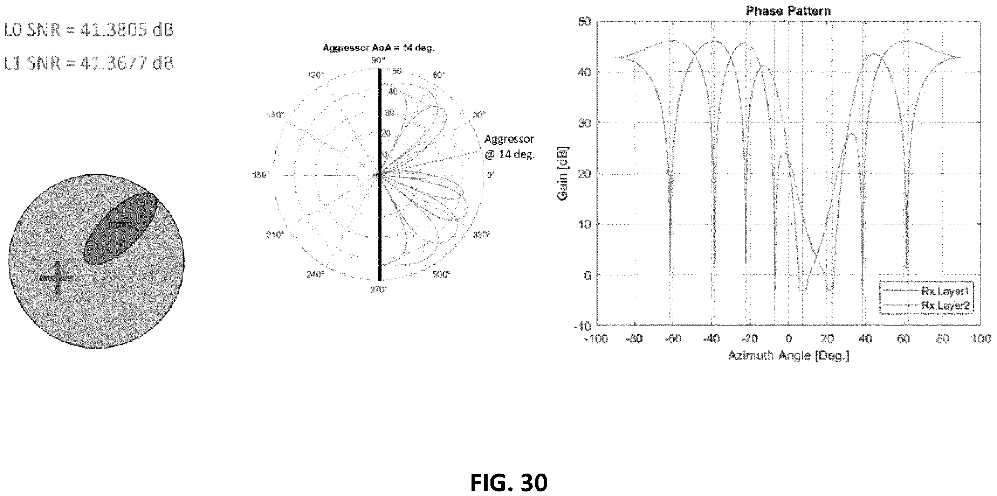

FIG. 30 shows the Gain vs. AoA post the interference cancellation. As can be seen from FIG. 30, the beamforming gain at 14 degrees AoA, where the interference was present, is significantly degraded. In this case, also any UE's power in the same direction will be attenuated as well. However, the attenuation of the aggressor in this specific direction of 14 degrees AoA will restore the SNR of the layers back to > 40 dB.

Following are the additional implementations for this disclosure:

**Full and partial band interference cancellation:**

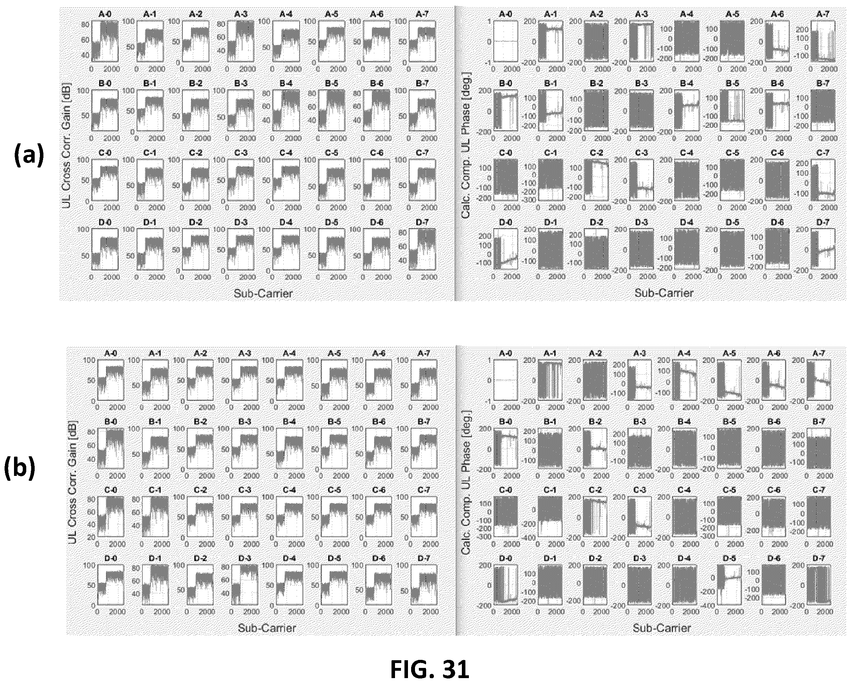

As discussed in the previous section, the interference estimation and cancellation can be performed on part of the BW, only where the interference exists in the CC. FIG. 31 provides an example for partial PRB interference and its interference sensing results. From FIG. 31 it can be shown that the interference is present on all Rx antennas and its gain is higher than the noise floor by ~30dB. In addition, the interference phase can be correlated between the antennas as the relative capture phases to antenna 0 is fixed. FIG. 31(a) and FIG. 31(b) provide the IS captures results after 5min and 15min from RU AC respectively. It is depicted that some of the antenna phases in the after 5min are not correlated to antenna 0 and some other antenna phases are not correlated to antenna 0 in the after 15min IS results. Hence, multiple IS captures for all antennas can provide the complete phase correlation of the interference in the case it is aligned to the RU transmission.

**ACLR Measurement and Out-of-CC (Channel/Band) Interference Detection:**

In another implementation, a multi-CC system can be also used to measure/collect and detect Out-of-CC power. There are two disclosed applications:

   (1) ACLR Measurement (Tx): In this case, the intention is to measure the power over the adjacent CCs (e.g., first-order ACLR, second-order ACLR - next adjacent CCs) to the main CC that is under use. In most cases, the ACLR measurement is over the same BW as the used CC BW (e.g., 100MHz), and the ACLR center frequency is usually an offset of a multiple of the CC BW from the CC in use.

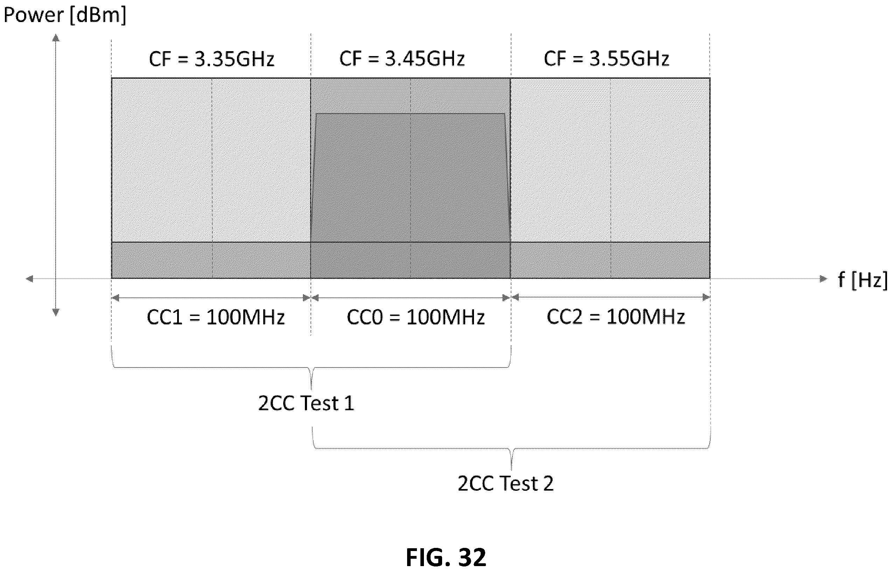

FIG. 32 provides an example for the ACLR case that can also be used for the Out-of-CC test. In FIG. 32, the first-order ACLR test is provided, it means the most adjacent CCs to CC0 (BW = 100MHz) are tested. The test is conducted to measure the power at these adjacent 100MHz CCs (noted as CC1) with the presence of the (max) power in CC0. The ACLR is a good indication for the performance of the CC digital filtering and for system power distortions due to HW impairments such as digital/analog saturation, spurious due to intermodulation that results from analog components' non-linearities, and quantization noise. The lower the level of the ACLR the higher the quality of the RU.

Hence, to measure the ACLR on CC1 for example (2CC Test1 in FIG. 32), the system will be configured as follows (100MHz example):

a) Set CC0 to 3.45GHz and CC1 to 3.35GHz carrier frequencies (CFs).
b) Set the AC CC0 to Tx cal mode and inject the ZC sequence to antenna x.
c) Set the AC CC1 to capture from antenna 0 (the AC Tx Cal receiver).
d) Measure the power of the captured symbol from antenna 0.

Repeat steps a-d but with CC2 (Test2) instead of CC1, where C2 CF is configured to 3.55GHz. By the end of of this process, the ACLR of antenna x from both sides is obtained. Optionally, for a better accuracy, multiple iterations of Test1 and Test 2 can be assigned with different injected sequences and then, for example, can average the results.

### (2) Out-of-CC (Channel/Band) Interference Detection (Rx):

Another usage of the multi-CC system is the measurement and detection of the out-of-CC inteference. Unlike the ACLR which is usually measured on the Tx side, Out-of-CC Interference is measured on the Rx side and its frequency range can be bigger and does not need to be fixed to a certain carrier frequency and to a certain BW. The range of the Out-of-CC Interference detection system can be the range of the system anlaog filter. The Out-of-CC interference detection can assist the Multi-CC system to alocate the BWs to interference-free frequency bands. In order to measure the Out-of-CC interference on CC1 for example (2CC Test1 in FIG. 32), the system will be configured as follows (100MHz example for antenna x In-CC and Out-of-CC Interference Detection):

a) Set CC0 to 3.45GHz and CC1 to 3.35GHz carrier frequencies (CFs).
b) Opt. set the AC CC0 to empty Rx cal from antenna x (for In-CC Interference Sensing/Detection).
c) Set the AC CC1 to empty Rx cal from antenna x.
d) Obtain the SC-based power of the captured symbol from antenna x.

Repeat steps a-d but with CC2 (Test2) instead of CC1, where CC2 CF can be configured to 3.55GHz. By the end of this process, the antenna x Out-of-CC (and opt. In-CC) interference is sensed and obtained. The next step is the interference detection stage as already explained in previous sections. Optionally, for better accuracy, multiple iterations of Test1 and Test2 can be assigned with different injected sequences and then, for example, can average the results.

### (3) Super-CC ACLR Measurement (Tx) and Interference Detection (Rx)

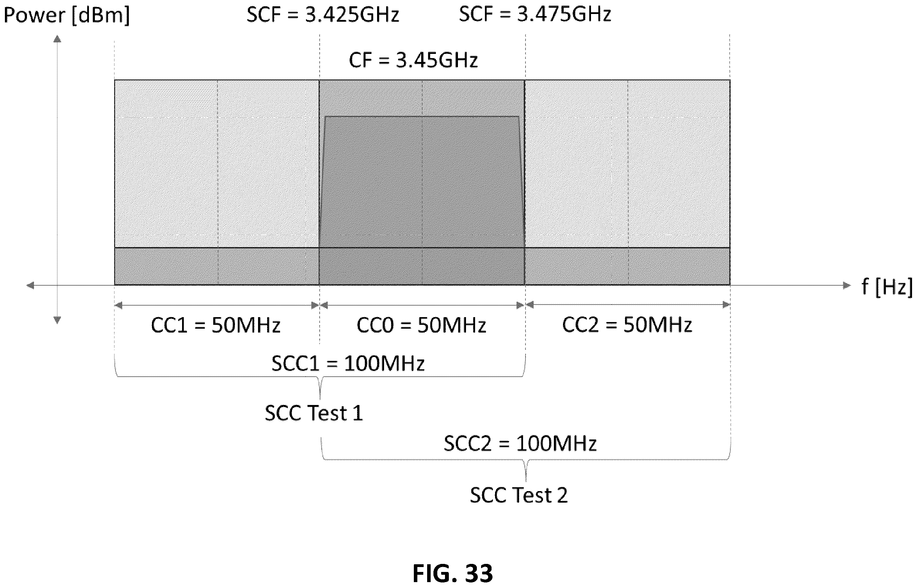

In another implimentataion, in some cases, instead of employing 2 CCs to measure ACLR and detect Out-of-CC interference, one can employ a super-CC to measure both CCs with a single CF. The super-CC is a higher BW CC that covers the CC BW is use. For example, for the ACLR test, one can choose to run a super-CC of 100MHz BW to measure the Test1 ACLR of a 50MHz CC and another super-CC of 100MHz BW to measure the Test2 ACLR of the same 50MHz CC. FIG. 33 portrays the method and provides example for frequency values for the Super-CC configuration to measure the ACLR and Out-of-CC interference.

In FIG. 33, the CC0 is use has 50MHz BW and CF = 3.45GHz. Hence, to measure the ACLR of CC1 for example (SCC Test1 in FIG. 22), the system can be configured as follows (SCC = 100MHz example):

a) Set SCC1 to super carrier frequency (SCF) = 3.425GHz with 100MHz BW.
b) Set the AC SCC1 to Tx cal mode and inject 50MHz ZC sequence to antenna x at the upper half of the SCC1 100MHz BW.
c) Set the AC SCC1 to 100MHz capture from antenna 0 (the AC Tx Cal receiver).
d) Measure the power of the captured symbol from antenna 0 for SCC1 which includes both CC0 and CC1 (50MHz each).

Repeat steps a-d but with SCC2 (for SCC Test2) instead of SCC1, where SCC2 SCF is configured to 3.475GHz and at step b the 50MHz injection is on the lower half of SCC2 BW. By the end of of this process, the ACLR of antenna x from both sides is obtained. Optionally, for a better accuracy, multiple iterations of SCC Test1 and SCC Test2 can be assigned with different injected sequences and then, for example, can average the results.

The same process can be applied to Out-of-CC interference measurements. In order to measure the Out-of-CC interference on CC1 for example (SCC Test1 in FIG. 33), the system can be configured as follows (50MHz example for antenna x In-CC and Out-of-CC Interference Detection):

a) Set SCC1 to super carrier frequency (SCF) = 3.425GHz with 100MHz BW.
b) Set the AC SCC1 to empty Rx cal from antenna x (for In-CC and Out-of-CC Interference Sensing/Detection).
c) Run AC Rx cal.
d) Obtain the SC-based power of the captured symbol from antenna x for SCC1 = 100MHz.

Repeat steps a-d but with SCC2 (for SCC Test2) instead of SCC1, where SCC2 CF is configured to 3.475GHz. By the end of this process, the antenna x Out-of-CC (and In-CC) interference is sensed and obtained. Next step is the interference detection stage as already explained in previous sections. Optionally, for a better accuracy, multiple iterations of SCC Test1 and SCC Test2 can be assigned with different injected sequences and then, for example, can average the results.

**PUSCH DMRS Interference Detection:**

In another implimentation, the use of the UL demodulation reference signal (DMRS) as defined in 3GPP TS 38.211 version 15.2.0 Release 15 (ETSI TS 138 211 V15.2.0 (2018-07)) can be benficial to assist the above implimentations to detect the interference in the presence of mobility.

Since the S-Slot and GP rate is usually every 5ms, there can be a need to increase the detection rate due to mobility. Using the empty sub-carriers of the PUSCH DMRS (in case of up to 2 uplink layers per symbol or slot), the empty sub-carriers can provide additional information about the interference the same way as the empty Rx cal and can help sense and detect the interference. The advantage of using the UL DMRS is the rate which is once or multiple times per UL slot (0.5ms).

Using the occupied PUSCH DMRS sub-carriers can also provide information about the changes in the interference AoA in time. In that case, the use of all the 32 Massive-MIMO antennas as individual receivers and performing ch. estimation on each can help track the inteference location mobility in time. For channel estimation, to know the DMRS sequence, the provides the UEs IDs to the RU to allow the RU to perform the cross corrlation between the expected DMRS sequence and the received DMRS sequence.

**Parallel Processing Interference Sensing**

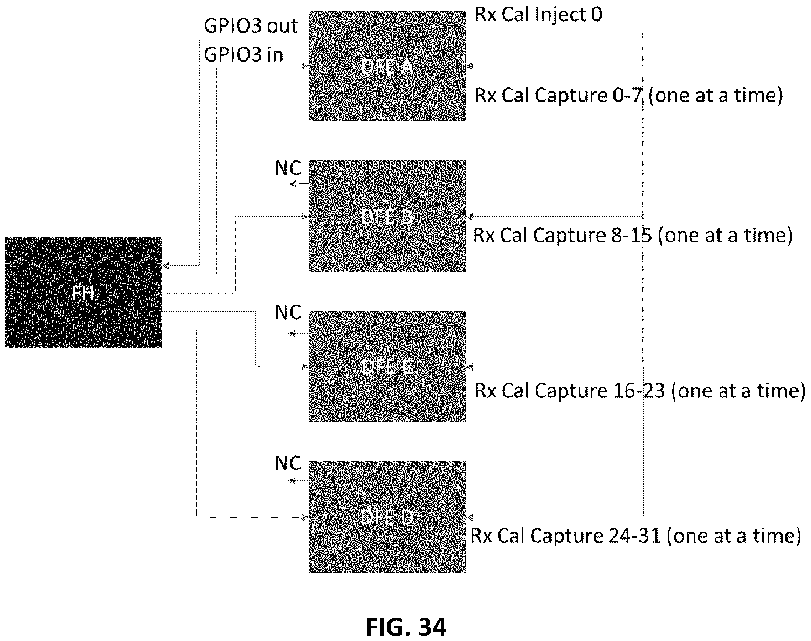

**Architecture:** The interference sensing described herein, is performed on most/all antennas, to derive the power and AoA direction estimation of the aggressor interference (see FIG. 25). As explained herein, some of the interferences are only temporal and dynamic which require the interference sensing to be performed simultaneously on multiple antennas to improve the accuracy of the power and AoA estimation. One solution is to execute the interference sensing on all antennas simultaneously, however, it will require high memory usage to save all the captured AC empty Rx calibration BWs from all the (32) antennas. Disclosed herein is an implementation to advantageously leverage the implementations described in U.S. Provisional Patent Application No. 63/507,336 entitled "Method and Apparatus for Parallel Processing Multi-Antenna Calibration" filed on June 9, 2023, the entirety of which is incorporated by reference hereby, to simultaneously capture the interference from part of the antennas. FIG. 34 describes the parallel processing multi-antenna Rx calibration architecture from the mentioned disclosure.

In FIG. 34, the ZC sequence is sent to all the antennas receivers. However, to reduce the complexity, only one antenna receiver at each Digital Front-End (DFE) FPGA/ASIC will be activated and capture the ZC sequence. Hence for 4 DFEs system, there will be 4 antennas processed simultaneously. The same method can be applied to Interference Sensing, however, instead of transmitting the ZC sequence, each DFE will only be capturing the signal at the antenna. Hence, for 4 DFEs, there will be 4 antennas capturing the Rx signal simultaneously each time. Accordingly, all the antennas will form the interference sensing after 8 iterations (for overall 32 antenna), different sets of (4) antennas at each iteration.

**Diagnostics**

**Equalization:** the AC can detect gain imbalance between the antennas. In this case the AC Comp. can be used to align the Tx/Rx gains between the antennas by applying difference equalization methods such as but not limited to Zero-Forcing (ZF) or Minimum Mean Square Error (MMSE).

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

**Claims**

1.  A method comprising:

    setting an Antenna Calibration (AC) Inject/Capture switch to Interference Sensing (IS) by, in an AC mode, injecting at an AC inject block a Zadoff-Chu (ZC) sequence to a transmit Tx processor signal to capture the ZC sequence in a receiver Rx processor signal, wherein in an IS mode, no signal is injected to allow a sensing of external interference;
    running an AC Rx calibration, wherein nothing is injected to a Digital Up Conversion (DUC], and the AC capture captures a received signal from the antennas instead of the injected ZC sequence from the transmitter Tx processor signal;
    in the AC mode, capturing the received signal at one symbol in a time-domain in an AC capture block, the same as the ZC sequence in the AC mode;
    cross correlating the captured received signal in the AC capture block with the AC injected signal with an AC algorithm; and
    converting the estimated interference and representing the estimated interference as either a complex value or as an interference gain and phase.

2.  The method of claim 1, further comprising:

    activating a carrier;
    calibrating a first antenna for the Tx calibration and the Rx calibration;
    writing the Tx calibration compensation to Tx processor memory and writing the Rx compensation to the receiver Rx processor memory;
    processing uplink/downlink traffic using beamforming weights programmed to an RU precoder;
    starting a Time-Division-Duplex (TDD) based traffic, where both the antenna calibration AC and the IS are performed during a guard period (GP) during an S-Slot;
    capturing the received signal during the IS session; and
    estimating the interfering signal.

3.  The method of claims 1-2, further comprising:

    reading full BW cross-correlated results from all antennas;
    including a past n antenna IS readings; and
    based on all the current and past n antenna readings, estimating the interference gain and phase, and derive an interference Angle of Arrival (AoA) for an interference aggressor.

4.  The method of any of claims 2-3, wherein the AoA aggressor estimate includes the calculation:

$$\alpha = AoA_{Azimuth} \text{ (unknown)}$$

$$\tan(\alpha) = \frac{y}{x} = S \qquad \text{Relative Phases (Meas}$$

$$\varphi_0 = \tan^{-1}\left(\frac{y - \frac{3.5\lambda}{2}}{x}\right) \qquad \varphi'_0 = 0$$

$$\varphi_1 = \tan^{-1}\left(\frac{y - \frac{2.5\lambda}{2}}{x}\right) \qquad \varphi'_1 = \varphi_1 - \varphi_0$$

$$\vdots$$

$$\varphi_7 = \tan^{-1}\left(\frac{y + \frac{3.5\lambda}{2}}{x}\right) \qquad \varphi'_7 = \varphi_7 - \varphi_0$$

$$\hat{S} = est.(S) \quad \text{Avg. over BW}$$

$$\hat{\alpha} = est.(\alpha) = \tan^{-1}(\hat{S})$$
$$-90 < \hat{\alpha} < +90 \qquad * \text{-}$$

**5.** The method of claim 4, further comprising:

obtaining a full BW for all RU Rx chains;
calculating a per CC interference power level; and
for an interference level greater than a threshold A above a noise floor, instructing, by a base-station (gNB) , the UEs allocated in the same direction of the interference AoA, to equally increase their transmitting power to maintain a connection throughput performance.

**6.** The method of claim 5, wherein the interference sensing includes a per RE or per physical resource block (PRB) interference gain estimation per carrier component and

**7.** The method of claim 6, comprising, using a gNB to select the communication to a UE on certain REs in each CC, and when the interference occupies only part of the BW in CC, instructing the UE, by the gNB, to transmit at the REs where the interference level is below a certain threshold above the noise floor.

**8.** The method of any of claims 1-7, further comprising:
providing additional information about the interference on empty sub-carriers of Physical Uplink Shared Channel (PUSCH) Demodulation Reference Signal (DMRS),

**9.** The method of claim 6, wherein all Massive-MIMO antennas are used as individual receivers, performing channel estimation on each antenna; and providing the additional information about the interference, including changes in interference Angle of Arrival (AoA), on the empty sub-carriers of PUSCH DMRS.

**10.** The method of any of claims 1-9, further comprising:

sending the ZC sequence to all the antenna receivers;
activating only one of the antenna receivers at each of a plurality of Digital Front-End (DFE) systems and capturing the ZC sequence; and
processing the captured ZC sequence from each active antenna of each of the plurality of DFEs simultaneously.

**11.** The method of any of claims 1-10, further comprising:

activating only one antenna receiver at each of a plurality of Digital Front-End (DFE) systems and capturing the Rx signal; and

processing the captured Rx signal from each active antenna of each of the plurality of DFEs simultaneously; whereby all the antennas perform the interference sensing after *y* iterations, different sets of DFE antennas at each iteration.

12. The method of any of claims 1-11, further comprising:
when running the AC Rx calibration, a Tx Power Amplifier (Tx PA) of antenna 0 is disabled, and Rx low noise amplifiers (LNAs) for antenna chains are enabled so that a received over the air (OTA) signal including the interference is amplified by the LNA before entering an Rx digital side.

13. A method of obtaining a Gain and Adjacent Channel Leakage Ratio (ACLR) from both sides of an antenna x to measuring, collect and detect out-of-CC power, the method comprising :

a) setting a Control Channel CC0 to aGHz and CC1 to bGHz carrier frequencies (CFs);
b) setting an Antenna Calibration (AC) CC0 to a Tx calibration mode and injecting a ZC sequence to antenna*x*;
c) setting an AC of the CC1 to capture from an antenna 0 of an AC Tx calibration receiver;
d) measuring the power of the captured symbol from antenna 0; and
e) repeating steps a)-d) but with CC2 instead of CC1, where CC2 CF is set to cGHz

the method preferably further comprising repeating steps a)-e) with plurality of different injected Zadoff-Chu (ZC) sequences and then averaging the results.

14. A method obtaining a Gain and Adjacent Channel Leakage Ratio (ACLR) from both sides of an antenna x to measuring, collect and detect out-of-CC power, the method comprising:

a) setting a CC0 to aGHz and CC1 to bGHz carrier frequencies (CFs);
b) optionally setting an AC CC0 to an empty Rx calibration from antenna x;
c) setting an AC of the CC1 the empty Rx calibration from antenna x;
d) obtaining the SC-based power of the captured symbol from antenna x; and
e) repeating steps a-d but with CC2 instead of CC1, where CC2 CF is set to cGHz

the method preferably further comprising repeating steps a)-e) with different injected sequences and then averaging the results.

15. A method of measuring, collecting and detecting Super-Control Channel (CC) Adjacent Channel Leakage Ratio (ACLR) Measurement (Tx) and Interference Detection comprising:

a) setting a CC0 to a super carrier frequency SCF of dGHz with gBW;
b) setting AC SCC1 to a Tx calibration mode and injecting an eZC sequence to antenna x at the upper half of the BW of the SCC1 SCF;
c) setting an AC of the SCC1 to gBW capture from an antenna 0 of the AC Tx calibration receiver;
d) measuring the power of the captured symbol from antenna 0 for SCC1; and
e) repeating steps a-d but with SCC2 instead of CC1, where CC2 CF is set to cGHz.

the method preferably further comprising repeating steps a)-e) with different injected sequences and then averaging the results.

**FIG. 1**

EP 4 618 450 A2

**FIG. 2**

EP 4 618 450 A2

EP 4 618 450 A2

**FIG. 3**

**FIG. 4**

EP 4 618 450 A2

**FIG. 5A**

EP 4 618 450 A2

FIG. 5B

**FIG. 6**

FIG. 7

FIG. 8

**FIG. 9A**

EP 4 618 450 A2

**FIG. 9B**

EP 4 618 450 A2

**FIG. 10**

**FIG. 11**

EP 4 618 450 A2

**FIG. 12**

EP 4 618 450 A2

5ms

6:4:4 or 10:2:2 (DL/GP/UL)

FIG. 13

FIG. 14

**FIG. 15**

EP 4 618 450 A2

FIG. 16

EP 4 618 450 A2

1: 3.55284GHz, 2: 3.58356GHz, 3: 3.61428GHz, 4: 3.645GHz

(a)    (b)

FIG. 17

FIG. 18

FIG. 19

**FIG. 20**

FIG. 21

**FIG. 22**

**FIG. 23**

Past Rx / Estimations (0..n-1):

Gain    Phase

Current Rx (n):

Gain    Phase

Aggressor Estimation

Estimation (n):

Gain    Phase

EP 4 618 450 A2

**FIG. 24**

$$\alpha = AoA_{Azimuth} \text{ (unknown)}$$

$$\tan(\alpha) = \frac{y}{x} = S$$

Relative Phases (Measured)

$$\varphi_0 = \tan^{-1}\left(\frac{y - \frac{3.5\lambda}{2}}{x}\right) \qquad \varphi'_0 = 0$$

$$\varphi_1 = \tan^{-1}\left(\frac{y - \frac{2.5\lambda}{2}}{x}\right) \qquad \varphi'_1 = \varphi_1 - \varphi_0$$

$$\vdots$$

$$\varphi_7 = \tan^{-1}\left(\frac{y + \frac{3.5\lambda}{2}}{x}\right) \qquad \varphi'_7 = \varphi_7 - \varphi_0$$

$$\hat{S} = \text{est.}(S) \quad \downarrow \quad \text{Avg. over BW}$$

$$\hat{\alpha} = est.(\alpha) = \tan^{-1}(\hat{S})$$
$$-90 < \hat{\alpha} < +90$$

Aggressor

Massive-MIMO RU

Azimuth

Elevation

\* - The same method can be applied for elevation for 3D AoA aggressor estimation

**FIG. 25**

EP 4 618 450 A2

Interference Cancellation

FIG. 26

FIG. 27

EP 4 618 450 A2

FIG. 28

**No Interference**

**With Interference**

(a)

(b)

FIG. 29

EP 4 618 450 A2

LO SNR = 41.3805 dB

L1 SNR = 41.3677 dB

**FIG. 30**

FIG. 31

**FIG. 32**

EP 4 618 450 A2

Power [dBm]

f [Hz]

SCF = 3.425GHz    SCF = 3.475GHz

CF = 3.45GHz

CC1 = 50MHz    CC0 = 50MHz    CC2 = 50MHz

SCC1 = 100MHz    SCC2 = 100MHz

SCC Test 1    SCC Test 2

**FIG. 33**

EP 4 618 450 A2

GPIO3 out
GPIO3 in

DFE A

Rx Cal Inject 0

Rx Cal Capture 0-7 (one at a time)

NC

DFE B

Rx Cal Capture 8-15 (one at a time)

NC

DFE C

Rx Cal Capture 16-23 (one at a time)

NC

DFE D

Rx Cal Capture 24-31 (one at a time)

FH

FIG. 34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63507336 A

**Non-patent literature cited in the description**

- *3GPP TS 23.501 V 18.1.0*, 05 April 2023
- *3GPP TS 38.300 V 17.4.0*, 28 March 2023
- *3GPP TS 38.401 V 17.4.0*, 03 April 2023
- *3GPP TS 38.425 17.3.0*, 03 April 2023
- *3GPP TS 38.211 V 15.2.0*
- *ETSI TS 138 211 V15.2.0*, July 2018
- *3GPP TS 38.300 17.3.0*